# EUROPEAN PATENT SPECIFICATION

(11) **EP 4 054 053 B1**
(45) Date of publication and mention of the grant of the patent: **05.08.2026**
(21) Application number: 20880969.9
(22) Date of filing: 21.05.2020
(51) Int. Cl.: H02J 50/12, H02J 50/80, B60L 53/126, H02M 3/335, H02M 3/00

(54) **WIRELESS CHARGING RECEIVING END, SYSTEM AND CONTROL METHOD**
DRAHTLOSER LADEEMPFÄNGER, SYSTEM UND STEUERVERFAHREN
EXTRÉMITÉ DE RÉCEPTION DE CHARGE SANS FIL, SYSTÈME, ET PROCÉDÉ DE COMMANDE

(30) Priority: 30.10.2019 CN 201911047000
(43) Date of publication of application: 07.09.2022
(73) Proprietor: Huawei Technologies Co., Ltd., Shenzhen, Guangdong 518129 (CN)
(72) Inventor: MAO, Yunhe, Shenzhen, Guangdong 518129 (CN); WU, Zhixian, Shenzhen, Guangdong 518129 (CN); LIU, Yanding, Shenzhen, Guangdong 518129 (CN)
(74) Representative: MERH-IP Matias Erny Reichl Hoffmann Patentanwälte PartG mbB
(86) International application number: PCT/CN2020/091461
(87) International publication number: WO 2021/082407

(56) References cited:
- CN-A- 106 374 578
- CN-A- 106 564 392
- CN-A- 107 154 683
- CN-A- 108 808 868
- CN-A- 109 995 098
- CN-A- 110 912 275
- CN-B- 106 374 579
- US-A1- 2015 001 956
- US-A1- 2015 274 023
- US-A1- 2016 006 289

## Description

This application claims priority to Chinese Patent Application No. 2019110470006, filed with the China National Intellectual Property Administration on October 30, 2019 and entitled "WIRELESS CHARGING RECEIVER, SYSTEM, AND CONTROL METHOD".

### TECHNICAL FIELD

This application relates to the field of wireless charging technologies, and in particular, to a wireless charging receiver, system, and control method.

### BACKGROUND

With aggravation of an energy shortage and environmental pollution in the modern society, as new energy vehicles, electric vehicles have received widespread attention. An electric vehicle drives by using a vehicle-mounted power battery pack as energy.

Currently, charging modes of an electric vehicle include contact charging and wireless charging. Because of being easy to use, no spark, and no electric shock hazard, wireless charging becomes a development direction of electric vehicles in the future.

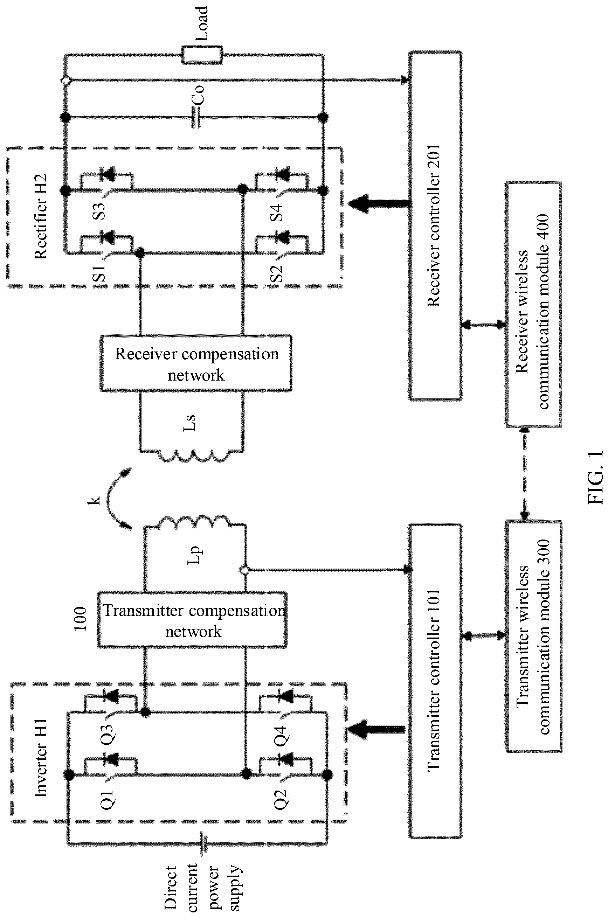

The following describes a working principle of a wireless charging system with reference to FIG. 1.

FIG. 1 is a schematic diagram of a wireless charging system.

The wireless charging system includes a wireless charging transmitter (simply referred to as a transmitter below) and a wireless charging receiver (simply referred to as a receiver below). Usually, the transmitter is located on the ground, and the receiver is located on a vehicle.

The transmitter includes an inverter H1, a transmitter compensation network 100, and a transmitter coil Lp.

For example, the inverter H1 is a full-bridge inverter. In this case, the inverter H1 may include four controllable switching tubes Q1 to Q4, and the inverter H1 inverts a direct current output by a direct current power supply to an alternating current.

The transmitter compensation network 100 compensates the alternating current output by the inverter H1, and then delivers the compensated alternating current to the transmitter coil Lp.

The transmitter coil Lp transmits, in a form of an alternating magnetic field, the alternating current compensated by the transmitter compensation network 100.

The receiver includes a receiver coil Ls, a receiver compensation network 200, and a rectifier H2.

The receiver coil Ls receives, in a form of an alternating magnetic field, electromagnetic energy transmitted by the transmitter coil Lp.

The receiver compensation network 200 compensates an alternating current received by the receiver coil Ls, and then delivers the compensated alternating current to the rectifier H2.

For example, the rectifier H2 is a full-bridge rectifier. In this case, the rectifier H2 may include four controllable switching tubes: S1 to S4. The rectifier H2 rectifies the received alternating current to a direct current, to charge a load. For an electric vehicle, the load is a vehicle-mounted power battery pack.

A transmitter controller 101 controls the controllable switching tubes of the inverter H1. A receiver controller 201 controls the controllable switching tubes of the rectifier H2. A communication receiver wireless communication module 400 wirelessly communicates with a transmitter wireless communication module 300. A speed of the wireless communication is lower than switching speeds of the switching tubes of the transmitter and the receiver. Therefore, when a control sequence of the controllable switching tubes in the rectifier of the receiver is faulty, the receiver may be damaged or the load may be damaged.
US 2015/001956 A discloses a wireless power receiving device that includes: a power receiving coil; a rectifier unit that performs full-wave rectification of the power received by the power receiving coil and supplies the power to a load; a power-receiving-side detecting unit that detects an output voltage value or an output current value from the rectifier unit; and a switching unit that short-circuits one of two current paths through the rectifier unit if the value detected by the power-receiving-side detecting unit exceeds a predetermined reference value.
US 2015/274023 A1 discusses a contactless charging system for charging a motor vehicle battery, including a primary induction circuit outside the motor vehicle powered by an electric power network, a secondary induction circuit installed on the motor vehicle and coupled to the battery via a rectifier bridge, a controlled switch mechanism configured to put the secondary induction circuit into short circuit without putting the battery into short circuit when there is an electrical malfunction on board the motor vehicle, and a controller configured to cut off power to the primary induction circuit when detecting a short circuit in the secondary induction circuit.
CN 107 154 683 A discloses a method for controlling electrical energy transmission, in that the control process comprises the following steps: first select the control method and compensation structure according to the load, if the load needs constant current power supply, then switch to a second secondary side compensation capacitor, i.e. use a primary side parallel secondary side parallel compensation structure, and select the constant current control method. CN 106 374 579 B discloses a wireless charging system including a compensation network that includes bilateral LCCC compensation network and LCCC-C compensation network, wherein a control device controls the wireless charging system to switch between the bilateral LCCC compensation network and the LCCC-C compensation network, to realize switching between constant current charging and constant voltage charging.

### SUMMARY

To resolve the foregoing technical problem, this application provides a wireless charging receiver, system, and control method, so that a receiver and a load can be protected from damage during turn-on or turn-off of the receiver, thereby improving safety of a wireless charging system.

According to a first aspect, this application provides a wireless charging receiver, including a receiver coil, a compensation network, a rectifier, and a controller. The receiver coil is configured to convert an alternating magnetic field transmitted by a transmitter to an alternating current, and deliver the alternating current to the compensation network. The compensation network compensates the alternating current, and then delivers the compensated alternating current to the rectifier. The rectifier rectifies the compensated alternating current to a direct current, and supplies the direct current to a load. The compensation network is a compensation circuit with a current source characteristic, so that the receiver coil and the compensation network, acting together with the transmitter, make an input end of the rectifier a constant current source. The controller is configured to: during turn-on of the receiver, control a switching tube in the rectifier to be closed, so that the load is bypassed, and then control the receiver to start working; or during turn-off of the receiver, control a switching tube of the rectifier to be closed, so that the load is bypassed, and then control the receiver to enter an off state.

With reference to the first aspect, in a first possible implementation, the controller is specifically configured to: during turn-on of the receiver, control a first-part switching tube in the rectifier to be closed, so that the load is bypassed; and during turn-off of the receiver, control a second-part switching tube in the rectifier to be closed, so that the load is bypassed. The first-part switching tube is a switching tube of an upper half bridge arm of the rectifier or a switching tube of a lower half bridge arm of the rectifier, and the second-part switching tube is the switching tube of the upper half bridge arm of the rectifier or the switching tube of the lower half bridge arm of the rectifier.

During turn-on of the receiver, the receiver controller controls the switching tube of the upper half bridge arm of the rectifier or the switching tube of the lower half bridge arm to be closed, so that the load is bypassed. In this case, no current flows through the load, and therefore, there is no excessively high voltage at two ends of the load during turn-on of the transmitter. This protects the load from damage. In addition, the other half bridge arm of the rectifier is also bypassed, so that no current flows through the other half bridge arm, and therefore, there is no excessively high voltage at two ends of the other half bridge arm during turn-on of the transmitter. During turn-off of the receiver, the controller controls the switching tube of the upper half bridge arm of the rectifier or the switching tube of the lower half bridge arm to be closed, so that the load is bypassed. In this case, no current flows through the load. Therefore, there is no excessively high voltage at the two ends of the load during turn-off of the transmitter. This protects the load from damage during turn-off of the transmitter. In addition, the other half bridge arm of the rectifier is also bypassed, so that no current flows through the other half bridge arm of the rectifier, and therefore, there is no excessively high voltage at two ends of the other half bridge arm during turn-off of the transmitter. This protects the rectifier, that is, protects the receiver, during turn-off of the receiver.

With reference to the first aspect or the foregoing possible implementation, in a second possible implementation, the rectifier includes two bridge arms, and all switching tubes of upper half bridge arms and lower half bridge arms of the two bridge arms are controllable switching tubes. During turn-on of the receiver, the controller controls all switching tubes of the upper half bridge arms of the rectifier or all switching tubes of the lower half bridge arms to be closed, so that the load is bypassed; and when it is determined that a current of a transmitter coil of the transmitter is greater than a first preset current, the controller controls a phase-shift angle between the two bridge arms to gradually increase to a preset value, controls the switching tubes of the upper half bridge arms and the switching tubes of the lower half bridge arms to be complementarily conducted, and then controls the receiver to start working.

Therefore, when the rectifier is a full-bridge rectifier, and all the switching tubes of the upper half bridge arms and lower half bridge arms of the two bridge arms are controllable switching tubes, the receiver and the load can be protected from damage during turn-on of the receiver. This improves safety of a wireless charging system.

With reference to any one of the first aspect or the foregoing possible implementations, in a third possible implementation, the rectifier includes the two bridge arms, and all the switching tubes of the upper half bridge arms and lower half bridge arms of the two bridge arms are the controllable switching tubes. During turn-off of the receiver, when it is determined that a current of the transmitter coil of the transmitter is less than a second preset current and greater than the first preset current, the controller controls a phase-shift angle between the two bridge arms to gradually decrease until all the switching tubes of the upper half bridge arms of the rectifier are closed or all the switching tubes of the lower half bridge arms are closed, so that the load is bypassed; and then the controller controls the receiver to enter the off state.

Therefore, when the rectifier is a full-bridge rectifier, and all the switching tubes of the upper half bridge arms and lower half bridge arms of the two bridge arms are controllable switching tubes, the receiver and the load can be protected from damage during turn-off of the receiver. This improves safety of the wireless charging system.

With reference to any one of the first aspect or the foregoing possible implementations, in a fourth possible implementation, the rectifier includes two bridge arms, all switching tubes of upper half bridge arms of the two bridge arms are diodes, and all switching tubes of lower half bridge arms of the two bridge arms are controllable switching tubes. During turn-on of the receiver, the controller controls all the controllable switching tubes to be closed; when it is determined that a current of a transmitter coil of the transmitter is greater than a first preset current, controls duty cycles of drive signals of the controllable switching tubes of the two bridge arms to gradually decrease to a preset value; and then controls the receiver to start working.

Therefore, there is no excessively high voltage at two ends of the load during turn-on. This protects the load from damage. In addition, the other half bridge arms of the rectifier are also bypassed, so that there is no excessively high voltage at two ends of the other half bridge arm during turn-on of the transmitter. This protects the rectifier during turn-on. The receiver and the load can be protected from damage during turn-on of the receiver, thereby improving safety of a wireless charging system.

With reference to any one of the first aspect or the foregoing possible implementations, in a fifth possible implementation, the rectifier includes the two bridge arms, all the switching tubes of the upper half bridge arms of the two bridge arms are the diodes, and all the switching tubes of the lower half bridge arms of the two bridge arms are the controllable switching tubes. During turn-off of the receiver, when it is determined that a current of the transmitter coil of the transmitter is less than a second preset current and greater than the first preset current, the controller controls duty cycles of drive signals of the controllable switching tubes of the two bridge arms to gradually increase until all the controllable switching tubes are closed, and then controls the receiver to enter the off state.

Therefore, during turn-off of the receiver, the load can be bypassed. In this case, no current flows through the load, and therefore, there is no excessively high voltage at the two ends of the load during turn-off of the transmitter. This protects the load from damage during turn-off of the transmitter. In addition, the other half bridge arms of the rectifier are also bypassed, so that no current flows through the other half bridge arm, and therefore, there is no excessively high voltage at two ends of the other half bridge arm during turn-off of the transmitter. This protects the rectifier during turn-off.

With reference to any one of the first aspect or the foregoing possible implementations, in a sixth possible implementation, the rectifier may alternatively include one bridge arm, and all switching tubes of an upper half bridge arm and a lower half bridge arm of the bridge arm are controllable switching tubes. During turn-on of the receiver, the controller controls a switching tube of the upper half bridge arm of the rectifier or a switching tube of the lower half bridge arm to be closed; and when it is determined that a current of a transmitter coil of the transmitter is greater than a first preset current, controls the switching tube of the upper half bridge arm and the switching tube of the lower half bridge arm to be complementarily conducted.

Therefore, during turn-on of the receiver, the load and the other unclosed switching tube can be bypassed, thereby avoiding damage to the load and the rectifier caused by an excessively high voltage.

With reference to any one of the first aspect or the foregoing possible implementations, in a seventh possible implementation, the rectifier may alternatively include the one bridge arm, and all the switching tubes of the upper half bridge arm and lower half bridge arm of the bridge arm are the controllable switching tubes. During turn-off of the receiver, when it is determined that a current of the transmitter coil of the transmitter is less than a second preset current and greater than the first preset current, the controller controls the switching tube of the lower half bridge arm of the rectifier to be closed, so that the load is bypassed, and then controls the receiver to enter the off state.

Therefore, during turn-off of the receiver, the load and the other unclosed switching tube can be bypassed, thereby avoiding damage to the load and the rectifier caused by an excessively high voltage.

With reference to any one of the first aspect or the foregoing possible implementations, in an eighth possible implementation, the rectifier includes one bridge arm, a switching tube of a lower half bridge arm of the bridge arm is a controllable switching tube, and a switching tube of an upper half bridge arm of the bridge arm is a diode. During turn-on of the receiver, the controller controls the controllable switching tube of the rectifier to be closed, and when it is determined that a current of a transmitter coil of the transmitter is greater than a first preset current, controls a switch state of the controllable switching tube based on a preset duty cycle.

Therefore, during turn-on of the receiver, the load and the diode can be bypassed, thereby avoiding damage to the load and the rectifier caused by an excessively high voltage.

With reference to any one of the first aspect or the foregoing possible implementations, in a ninth possible implementation, the rectifier includes the one bridge arm, the switching tube of the lower half bridge arm of the bridge arm is the controllable switching tube, and the switching tube of the upper half bridge arm of the bridge arm is the diode. During turn-off of the receiver, when it is determined that a current of the transmitter coil of the transmitter is less than a second preset current and greater than the first preset current, the controller controls the controllable switching tube to be closed, so that the load is bypassed, and then controls the receiver to enter the off state.

Therefore, during turn-off of the receiver, the load and the diode can be bypassed, thereby avoiding damage to the load and the rectifier caused by an excessively high voltage.

According to a second aspect, this application further provides a wireless charging system. The system includes a transmitter and the receiver according to any one of the foregoing implementations. The transmitter includes an inverter, a transmitter compensation network, a transmitter coil, and a transmitter controller. The inverter is configured to invert a direct current to an alternating current, and deliver the alternating current to the transmitter compensation network. The transmitter compensation network is configured to compensate the alternating current, and then deliver the compensated alternating current to the transmitter coil. The transmitter coil transmits the compensated alternating current in a form of an alternating magnetic field. The transmitter controller controls closing of a controllable switching tube of the inverter, so that the transmitter coil generates a transmit current needed by the receiver; and is further configured to receive a turn-on request or turn-off request sent by a controller of the receiver or send a turn-on request or turn-off request to a controller of the receiver.

Because the wireless charging system includes the wireless charging receiver provided in the foregoing embodiment, smooth switching can be implemented during turn-on or turn-off of the receiver, thereby ensuring a normal control sequence in a turn-on/turn-off process of the wireless charging system, to protect the receiver and a load from damage, and further improve safety of the wireless charging system.

With reference to the second aspect, in a first possible implementation, the transmitter controller is further configured to send a current of the transmitter coil to the controller of the receiver.

According to a third aspect, this application further provides a wireless charging control method, applied to a wireless charging receiver. The receiver includes a receiver coil, a compensation network, and a rectifier. The compensation network is a compensation circuit with a current source characteristic, so that the receiver coil and the compensation network, acting together with a transmitter, make an input end of the rectifier a constant current source. The method includes:
during turn-on of the receiver, controlling a switching tube in the rectifier to be closed, so that a load is bypassed, and then controlling the receiver to start working;
   or
during turn-off of the receiver, controlling a switching tube in the rectifier to be closed, so that a load is bypassed, and then controlling the receiver to enter an off state.

According to the control method, smooth switching can be implemented during turn-on or turn-off of the receiver, thereby ensuring a normal control sequence in a turn-on/turn-off process of a wireless charging system, to protect the receiver and the load from damage, and further improve safety of the wireless charging system.

With reference to the third aspect, in a first possible implementation, during turn-on of the receiver, a first-part switching tube in the rectifier is controlled to be closed, so that the load is bypassed; and during turn-off of the receiver, a second-part switching tube in the rectifier is controlled to be closed, so that the load is bypassed. The first-part switching tube is a switching tube of an upper half bridge arm of the rectifier or a switching tube of a lower half bridge arm of the rectifier, and the second-part switching tube is the switching tube of the upper half bridge arm of the rectifier or the switching tube of the lower half bridge arm of the rectifier.

With reference to the third aspect or the foregoing possible implementation, in a second possible implementation, the rectifier includes two bridge arms, and all switching tubes of upper half bridge arms and lower half bridge arms of the two bridge arms are controllable switching tubes. The controlling a switching tube in the rectifier to be closed, so that a load is bypassed, and then controlling the receiver to start working specifically includes: during turn-on of the receiver, controlling all switching tubes of the upper half bridge arms of the rectifier or all switching tubes of the lower half bridge arms to be closed, so that the load is bypassed; when it is determined that a current of a transmitter coil of the transmitter is greater than a first preset current, controlling a phase-shift angle between the two bridge arms to gradually increase to a preset value, and controlling the switching tubes of the upper half bridge arms and the switching tubes of the lower half bridge arms to be complementarily conducted; and then controlling the receiver to start working.

Therefore, when the rectifier is a full-bridge rectifier, and all the switching tubes of the upper half bridge arms and lower half bridge arms of the two bridge arms are controllable switching tubes, the receiver and the load can be protected from damage during turn-on of the receiver. This improves safety of the wireless charging system.

With reference to any one of the third aspect or the foregoing possible implementations, in a third possible implementation, the rectifier includes the two bridge arms, and all the switching tubes of the upper half bridge arms and lower half bridge arms of the two bridge arms are the controllable switching tubes. The controlling a switching tube in the rectifier to be closed, so that a load is bypassed, and then controlling the receiver to enter an off state specifically includes: when it is determined that a current of the transmitter coil of the transmitter is less than a second preset current and greater than the first preset current, controlling a phase-shift angle between the two bridge arms to gradually decrease until all the switching tubes of the upper half bridge arms of the rectifier are closed or all the switching tubes of the lower half bridge arms are closed, so that the load is bypassed, and then controlling the receiver to enter the off state.

Therefore, when the rectifier is a full-bridge rectifier, and all the switching tubes of the upper half bridge arms and lower half bridge arms of the two bridge arms are controllable switching tubes, the receiver and the load can be protected from damage during turn-off of the receiver. This improves safety of the wireless charging system.

With reference to any one of the third aspect or the foregoing possible implementations, in a fourth possible implementation, the rectifier includes two bridge arms, all switching tubes of upper half bridge arms of the two bridge arms are diodes, and all switching tubes of lower half bridge arms of the two bridge arms are controllable switching tubes. The controlling a switching tube in the rectifier to be closed, so that a load is bypassed, and then controlling the receiver to start working specifically includes: controlling all the controllable switching tubes to be closed; when it is determined that a current of a transmitter coil of the transmitter is greater than a first preset current, controlling duty cycles of drive signals of the controllable switching tubes of the two bridge arms to gradually decrease to a preset value; and then controlling the receiver to start working.

Therefore, there is no excessively high voltage at two ends of the load during turn-on. This protects the load from damage. In addition, the other half bridge arms of the rectifier are also bypassed, so that there is no excessively high voltage at two ends of the other half bridge arm during turn-on of the transmitter. This protects the rectifier during turn-on. The receiver and the load can be protected from damage during turn-on of the receiver, thereby improving safety of the wireless charging system.

With reference to any one of the third aspect or the foregoing possible implementations, in a fifth possible implementation, when the rectifier includes the two bridge arms, and all the switching tubes of the upper half bridge arms of the two bridge arms are the diodes, the controlling a switching tube in the rectifier to be closed, so that a load is bypassed, and then controlling the receiver to enter an off state specifically includes: when it is determined that a current of the transmitter coil of the transmitter is less than a second preset current and greater than the first preset current, controlling, by a controller, duty cycles of drive signals of the controllable switching tubes of the two bridge arms to gradually increase until all the controllable switching tubes are closed, and then controlling the receiver to enter the off state.

Therefore, during turn-off of the receiver, the load can be bypassed. In this case, no current flows through the load, and therefore, there is no excessively high voltage at the two ends of the load during turn-off of the transmitter. This protects the load from damage during turn-off of the transmitter. In addition, the other half bridge arms of the rectifier are also bypassed, so that no current flows through the other half bridge arm, and therefore, there is no excessively high voltage at two ends of the other half bridge arm during turn-off of the transmitter. This protects the rectifier during turn-off.

With reference to any one of the third aspect or the foregoing possible implementations, in a sixth possible implementation, the rectifier includes one bridge arm, and all switching tubes of an upper half bridge arm and a lower half bridge arm of the bridge arm are controllable switching tubes. The controlling all switching tubes in the rectifier to be closed, so that a load is bypassed, and then controlling the receiver to start working specifically includes: controlling a switching tube of the lower half bridge arm of the rectifier to be closed; when it is determined that a current of a transmitter coil of the transmitter is greater than a first preset current, controlling a switching tube of the upper half bridge arm and the switching tube of the lower half bridge arm to be complementarily conducted; and then controlling the receiver to start working.

Therefore, during turn-on of the receiver, the load and the other unclosed switching tube can be bypassed, thereby avoiding damage to the load and the rectifier caused by an excessively high voltage.

With reference to any one of the third aspect or the foregoing possible implementations, in a seventh possible implementation, when the rectifier includes the one bridge arm, and all the switching tubes of the upper half bridge arm and lower half bridge arm of the bridge arm are the controllable switching tubes, the controlling a switching tube in the rectifier to be closed, so that a load is bypassed, and then controlling the receiver to enter an off state specifically includes: when it is determined that a current of the transmitter coil of the transmitter is less than a second preset current and greater than the first preset current, controlling the switching tube of the lower half bridge arm of the rectifier to be closed, so that the load is bypassed, and then controlling the receiver to enter the off state.

Therefore, during turn-off of the receiver, the load and the other unclosed switching tube can be bypassed, thereby avoiding damage to the load and the rectifier caused by an excessively high voltage.

With reference to any one of the third aspect or the foregoing possible implementations, in an eighth possible implementation, the rectifier includes one bridge arm, a switching tube of a lower half bridge arm of the bridge arm is a controllable switching tube, and a switching tube of an upper half bridge arm of the bridge arm is a diode. The controlling a switching tube in the rectifier to be closed, so that a load is bypassed, and then controlling the receiver to start working specifically includes: controlling the controllable switching tube of the rectifier to be closed, and when it is determined that a current of a coil of the transmitter is greater than a first preset current, controlling a switch state of the controllable switching tube based on a preset duty cycle.

Therefore, during turn-on of the receiver, the load and the diode can be bypassed, thereby avoiding damage to the load and the rectifier caused by an excessively high voltage.

With reference to any one of the third aspect or the foregoing possible implementations, in a ninth possible implementation, when the rectifier includes the one bridge arm, the switching tube of the lower half bridge arm of the bridge arm is the controllable switching tube, and the switching tube of the upper half bridge arm of the bridge arm is the diode, the controlling a switching tube in the rectifier to be closed, so that a load is bypassed, and then controlling the receiver to enter an off state specifically includes: when it is determined that a current of the transmitter coil of the transmitter is less than a second preset current and greater than the first preset current, controlling, by a controller, the controllable switching tube to be closed, so that the load is bypassed, and then controlling the receiver to enter the off state.

Therefore, during turn-off of the receiver, the load and the diode can be bypassed, thereby avoiding damage to the load and the rectifier caused by an excessively high voltage.

This application has at least the following advantages.

During turn-on of the wireless charging receiver provided in this application, because the wireless charging transmitter, the receiver coil, and the compensation network of the receiver can be equivalent to a current source, when the load is open-circuited, an excessively high voltage is caused at the two ends of the load, and consequently, the load and the receiver may be damaged. Therefore, the controller of the receiver controls the switching tube of the upper half bridge arm of the rectifier or the switching tube of the lower half bridge arm to be closed, so that the load is bypassed. In this case, no current flows through the load, and therefore, there is no excessively high voltage at the two ends of the load during turn-on of the transmitter. This protects the load from damage. In addition, the other half bridge arm of the rectifier is also bypassed, for example, when the switching tube of the upper half bridge arm of the rectifier is controlled to be closed, the lower half bridge arm of the rectifier is bypassed, so that no current flows through the other half bridge arm, and therefore, there is no excessively high voltage at two ends of the other half bridge arm during turn-on of the transmitter. This protects the rectifier, that is, protects the receiver.

During turn-off of the receiver, the controller controls the switching tube of the upper half bridge arm of the rectifier or the switching tube of the lower half bridge arm to be closed, so that the load is bypassed. In this case, no current flows through the load regardless of whether the load is in an open-circuited state, and therefore, there is no excessively high voltage at the two ends of the load during turn-off of the transmitter. This protects the load from damage during turn-off of the transmitter. In addition, the other half bridge arm of the rectifier is also bypassed, so that no current flows through the other half bridge arm, and therefore, there is no excessively high voltage at two ends of the other half bridge arm during turn-off of the transmitter. This protects the rectifier, that is, protects the receiver. Then, the controller controls the receiver to enter the off state.

To sum up, with the wireless charging receiver provided in this application, the receiver and the load can be protected from damage during turn-on or turn-off of the receiver, thereby improving safety of the wireless charging system.

### BRIEF DESCRIPTION OF DRAWINGS

FIG. 1 is a schematic diagram of a wireless charging system;
FIG. 2 is a schematic diagram of a wireless charging system of an electric vehicle according to this application;
FIG. 3 is a schematic diagram of a structure of the wireless charging system of the electric vehicle provided in FIG. 2;
FIG. 4a is a schematic diagram of an LCC-type compensation network according to this application;
FIG. 4b is a schematic diagram of an LC-type compensation network according to this application;
FIG. 4c is a schematic diagram of a P-type compensation network according to this application;
FIG. 4d is a schematic diagram of an S-type compensation network according to this application;
FIG. 5 is a schematic diagram of a wireless charging system whose output is of a current source type according to this application;
FIG. 6 is a schematic diagram of a wireless charging system corresponding to a wireless charging receiver according to Embodiment 1 of this application;
FIG. 7 is a schematic diagram of a wireless charging system corresponding to another wireless charging receiver according to Embodiment 2 of this application;
FIG. 8 is a schematic diagram of a control sequence of a rectifier and controllable switching tubes in a turn-on process of the receiver according to Embodiment 2 of this application;
FIG. 9 is a schematic diagram of a control sequence of a rectifier and controllable switching tubes in a turn-off process of the receiver according to Embodiment 2 of this application;
FIG. 10 is a schematic diagram of a wireless charging system corresponding to still another wireless charging receiver according to Embodiment 3 of this application;
FIG. 11 is a schematic diagram of a control sequence of a rectifier and controllable switching tubes in a turn-on process of the receiver according to Embodiment 3 of this application;
FIG. 12 is a schematic diagram of a control sequence of a rectifier and controllable switching tubes in a turn-off process of the receiver according to Embodiment 3 of this application;
FIG. 13 is a schematic diagram of a wireless charging system corresponding to yet another wireless charging receiver according to Embodiment 4 of this application;
FIG. 14 is a schematic diagram of a control sequence of a rectifier and controllable switching tubes in a turn-on process of the receiver according to Embodiment 4 of this application;
FIG. 15 is a schematic diagram of a control sequence of a rectifier and controllable switching tubes in a turn-off process of the receiver according to Embodiment 4 of this application;
FIG. 16 is a schematic diagram of a wireless charging system corresponding to another wireless charging receiver according to Embodiment 5 of this application;
FIG. 17 is a schematic diagram of a control sequence of a rectifier and controllable switching tubes in a turn-on process of the receiver according to Embodiment 5 of this application;
FIG. 18 is a schematic diagram of a control sequence of a rectifier and controllable switching tubes in a turn-off process of the receiver according to Embodiment 5 of this application;
FIG. 19 is a schematic diagram of a wireless charging system according to an embodiment of this application;
FIG. 20 is a flowchart of a method for turning on a wireless charging receiver according to an embodiment of this application; and
FIG. 21 is a flowchart of a method for turning off a wireless charging receiver according to an embodiment of this application.

### DESCRIPTION OF EMBODIMENTS

To make a person skilled in the art better understand the technical solutions provided in embodiments of this application, the following first describes an application scenario of a wireless charging transmitting apparatus.

A wireless charging receiver provided in this application wirelessly induces, by using a receiver coil, an alternating magnetic field sent by a transmitter, and converts the alternating magnetic field to a direct current to charge a load. When the wireless charging receiver and the wireless charging transmitter are applied to the electric vehicle field, the transmitter may be located on the ground, the receiver may be located on an electric vehicle, and the receiver charges a vehicle-mounted power battery pack of the electric vehicle.

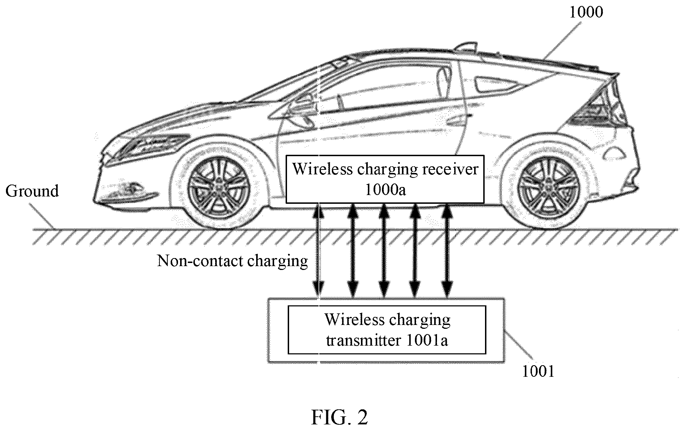

FIG. 2 is a schematic diagram of a wireless charging system of an electric vehicle according to this application.

The wireless charging system may include at least an electric vehicle 1000 and a wireless charging station 1001.

A wireless charging receiver 1000a is located on the electric vehicle 1000, and a wireless charging transmitter 1001a is located at the wireless charging station 1001 on the ground.

Currently, a charging process of the wireless charging system is that the wireless charging receiver 1000a and the wireless charging transmitter 1001a complete transfer of electric energy in a wireless manner, to charge the power battery pack.

The wireless charging station 1001 may be specifically a fixed wireless charging station, a fixed wireless charging parking space, a wireless charging road, or the like. The wireless charging transmitter 1001a may be disposed on the ground or buried under the ground (the figure shows a case in which the wireless charging transmitter 1001a is buried under the ground).

The wireless charging receiver 1000a may be integrated into the bottom of the electric vehicle 1000. When the electric vehicle 1000 enters a wireless charging range of the wireless charging transmitter 1001a, the electric vehicle 1000 may be charged in a wireless charging manner. A power receive module and a rectifier circuit of the wireless charging receiver 1000a may be integrated, or may be separated. This is not specifically limited in this application. When the power receive module and the rectifier circuit are separated, a rectifier in the rectifier circuit is usually placed in the vehicle.

A power transmit module and an inverter of the wireless charging transmitter 1001a may be integrated, or may be separated. In addition, non-contact charging may be that the wireless charging receiver 1000a and the wireless charging transmitter 1001a perform energy transmission through electric field or magnetic field coupling, which may be specifically electric field induction, magnetic induction, magnetic resonance, or wireless radiation. This is not specifically limited in this embodiment of this application. The electric vehicle 1000 and the wireless charging station 1001 may further perform bidirectional charging. To be specific, the wireless charging station 1001 charges the electric vehicle 1000 by using a charging power supply, and the electric vehicle 1000 may also be discharged to the charging power supply.

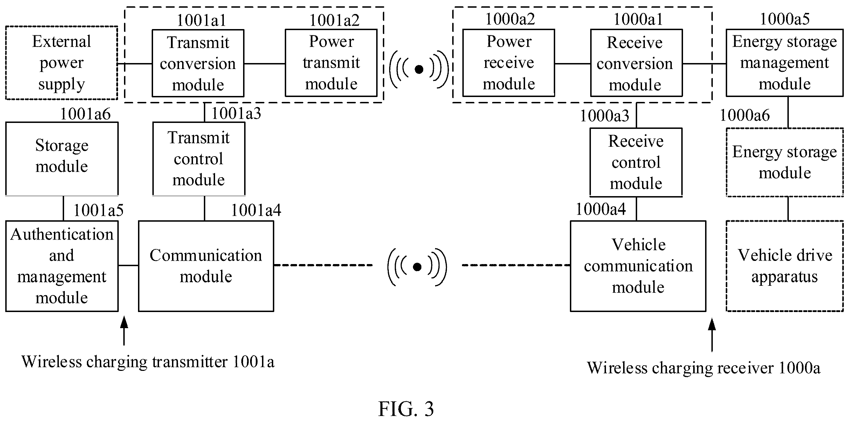

FIG. 3 is a schematic diagram of a structure of the wireless charging system of the electric vehicle provided in FIG. 2.

The wireless charging transmitter 1001a shown in the figure includes a transmit conversion module 1001a1, a power transmit antenna 1001a2, a transmit control module 1001a3, a communication module 1001a4, an authentication and management module 1001a5, and a storage module 1001a6.

The wireless charging receiver 1000a includes a power receive module 1000a2, a receive control module 1000a3, a receive conversion module 1000a1, a vehicle communication module 1000a4, an energy storage management module 1000a5, and an energy storage module 1000a6. In addition, the receive conversion module 1000a1 may be connected to the energy storage module 1000a6 by using the energy storage management module 1000a5, and received energy is used to charge the energy storage module 1000a6, to drive the electric vehicle. The energy storage management module 1000a5 and the energy storage module 1000a6 may be located inside the wireless charging receiver 1000a, or may be located outside the wireless charging receiver 1000a. This is not specifically limited in this embodiment of this application. The power receive module 1000a2 includes a receiver coil.

The transmit conversion module 1001a1 may be connected to an external power supply, and convert, to a high-frequency alternating current, an alternating current or a direct current obtained from the external power supply. When an input of the external power supply is an alternating current, the transmit conversion module 1001a1 includes at least a power factor correction unit and an inverter. When an input of the external power supply is a direct current, the transmit conversion module 1001a1 includes at least an inverter. The power factor correction unit is configured to make an input current phase of the wireless charging system consistent with a power grid voltage phase, reduce a harmonic content of the wireless charging system, and increase a power factor value, thereby reducing pollution brought by the wireless charging system to a power grid, and improving reliability. The power factor correction unit may further increase or decrease an output voltage of the power factor correction unit based on a next-stage requirement. The inverter converts, to a high-frequency alternating current voltage, a voltage that is output by the power factor correction unit, and then applies the high-frequency alternating current voltage to the power transmit module 1001a2. The high-frequency alternating current voltage can improve transmission efficiency and increase a transmission distance. The external power supply may be located inside or outside the wireless charging transmitter 1001a.

The power transmit module 1001a2 is configured to transmit an alternating current output by the transmit conversion module 1001a1, in a form of an alternating magnetic field. The power transmit module 1001a2 includes a transmitter coil.

The transmit control module 1001a3 may control voltage, current, and frequency conversion parameter adjustment of the transmit conversion module 1001a1 based on an actual transmit power requirement of wireless charging, to control voltage and current output adjustment of a high-frequency alternating current in the power transmit module 1001a2.

The communication module 1001a4 and the vehicle communication module 1000a4 implement wireless communication between the wireless charging transmitter 1001a and the wireless charging receiver 1000a, where communicated content includes power control information, fault protection information, switch information, mutual authentication information, and the like. The wireless charging transmitter 1001a may receive information such as attribute information, a charging request, and mutual authentication information that are of the electric vehicle and that are sent by the wireless charging receiver 1000a. In addition, the wireless charging transmitter 1001a may further send wireless-charging transmit control information, mutual authentication information, historical wireless-charging data information, and the like to the wireless charging receiver 1000a. Specifically, manners of the foregoing wireless communication may include but are not limited to a combination of any one or more of Bluetooth (Bluetooth), wireless fidelity (Wireless-Fidelity, Wi-Fi), a ZigBee (Zigbee) protocol, a radio frequency identification (Radio Frequency Identification, RFID) technology, a long range (Long Range, Lora) wireless technology, and a near field communication (Near Field Communication, NFC) technology. Further, the communication module 1001a4 may further communicate with an intelligent terminal of a user owning the electric vehicle, and the user owning the electric vehicle implements remote authentication and user information transmission by using a communication function.

The authentication and management module 1001a5 is configured to perform mutual authentication and permission management between the wireless charging transmitter 1001a and the electric vehicle in the wireless charging system.

The storage module 1001a6 is configured to store charging process data, mutual authentication data (for example, the mutual authentication information), permission management data (for example, permission management information), and the like of the wireless charging transmitter 1001a. The mutual authentication data and the permission management data may be factory-set, or may be set by the user. This is not specifically limited in this embodiment of this application.

The power receive module 1000a2 receives, in a form of an alternating magnetic field, electromagnetic energy transmitted by the power transmit module 1001a2. Structure combination forms of compensation circuits of the power transmit module 1001a2 and the power receive module 1000a2 in the wireless charging system include an S-S type, a P-P type, an S-P type, a P-S type, an LCL-LCL type, an LCL-P type, an LCC-LCC type, and the like. This is not specifically limited in this embodiment of this application. The wireless charging transmitter 1001a and the wireless charging receiver 1000a may interchange functions, that is, the wireless charging receiver 1000a may also charge the wireless charging transmitter 1001a.

The receive conversion module 1000a1 converts the electromagnetic energy received by the power receive module 1000a2 to a direct current for charging of the energy storage module 1000a6. The receive conversion module 1000a1 includes at least a compensation circuit and a rectifier, and the rectifier converts a high-frequency resonant current and voltage received by the power receive module to a direct current.

The receive control module 1000a3 can adjust parameters such as a voltage, current, and frequency of the receive conversion module 1000a1 based on an actual receive power requirement of wireless charging.

An output of the wireless charging system may have a current source characteristic or a voltage source characteristic, which is mainly determined by compensation networks of the transmitter and the receiver jointly.

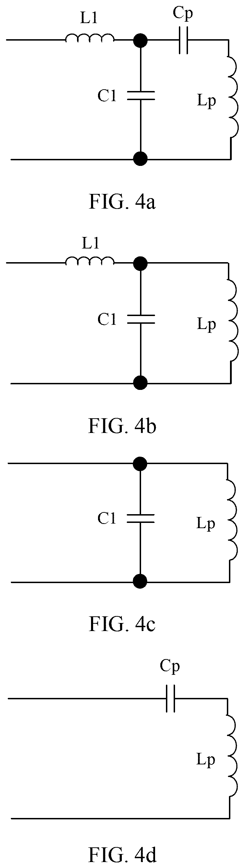

For details, refer to schematic diagrams of structures of various compensation networks shown in FIG. 4a to FIG. 4d.

Transmitter compensation networks shown in FIG. 4a to FIG. 4d are used as an example, and Lp in each figure is a transmitter coil.

In FIG. 4a, L1, C1, and Cp form an LCC-type compensation network.

In FIG. 4b, L1 and C1 form an LC-type compensation network.

In FIG. 4c, C1 and Lp are of a parallel (Parallel) structure, forming a P-type compensation network.

In FIG. 4d, Cp and Lp are of a series (Series) structure, forming an S-type compensation network.

A compensation network of a receiver is similar to that of a transmitter. Usually, compensation networks of a transmitter and a receiver are of a symmetric structure. Details are not described herein. Common combinations, of compensation networks and coils of a transmitter and a receiver, capable of making an output of a wireless charging system have a current source characteristic include LCCL-LCCL, LCL-LCL, LCCL-LCL, LCL-LCCL, LCCL-P, LCL-P, S-S, and the like. Taking LCCL-LCCL as an example, the first LCCL is a combination of a compensation network of a transmitter and a transmitter coil, and the second LCCL is a combination of a compensation network of a receiver and a receiver coil.

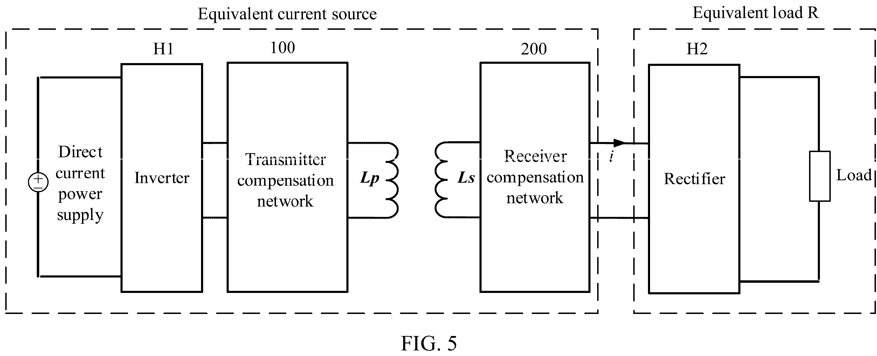

FIG. 5 is a schematic diagram of a wireless charging system whose output is of a current source type according to this application.

A wireless charging transmitter, a receiver coil Ls, and a compensation network 200 of a receiver are equivalent to an equivalent current source. A rectifier H2 and a load are equivalent to an equivalent load R of the current source. An equivalent circuit of the wireless charging system is shown in FIG. 5.

When the output of the wireless charging system is of the current source type, a voltage at two ends of the equivalent load R is related to only a magnitude i of a current of the equivalent current source. When the current i of the equivalent current source is determined, the voltage U at the two ends of the equivalent load is equal to i×R. A characteristic of the equivalent current source is that a magnitude of an output current does not change with the load. Therefore, it is required that the load cannot be open-circuited. This is because when the load is open-circuited, the equivalent load R is quite large, and consequently, the voltage U at the two ends of the equivalent load is far greater than a normal value, thereby damaging the load and the receiver, and even causing the receiver to explode.

To resolve the foregoing technical problem, this application provides a wireless charging receiver. During turn-on of the receiver, a controller of the receiver controls a switching tube of an upper half bridge arm of a rectifier or a switching tube of a lower half bridge arm of the rectifier to be closed, so that a load is bypassed. In this case, no current flows through the load regardless of whether the load is in an open-circuited state, and therefore, there is no excessively high voltage at two ends of the load during turn-on of a transmitter. This protects the load from damage. In addition, the other half bridge arm is also bypassed, so that no current flows through the other half bridge arm of the rectifier, and therefore, there is no excessively high voltage at two ends of the other half bridge arm during turn-on of the transmitter. This protects the rectifier. Then, the controller controls the receiver to start working for wireless charging. During turn-off of the receiver, the controller controls the switching tube of the upper half bridge arm of the rectifier or the switching tube of the lower half bridge arm to be closed, so that the load is bypassed. In this case, no current flows through the load regardless of whether the load is in the open-circuited state, and therefore, there is no excessively high voltage at the two ends of the load during turn-off of the transmitter. This protects the load from damage during turn-off of the transmitter. In addition, the other half bridge arm of the rectifier is also bypassed, so that no current flows through the other half bridge arm, and therefore, there is no excessively high voltage at two ends of the other half bridge arm during turn-off of the transmitter. This protects the rectifier controller. Then, the receiver is controlled to enter an off state.

To sum up, with the wireless charging receiver provided in this application, the receiver and the load can be protected from damage during turn-on or turn-off of the receiver, thereby improving safety of a wireless charging system.

To make a person skilled in the art understand the technical solutions in this application better, the following clearly describes the technical solutions in the embodiments of this application with reference to accompanying drawings in the embodiments of this application. It can be understood that words such as "first" and "second" in the following embodiments are merely used for ease of explanation and description, but do not constitute a limitation on this application.

### Receiver Embodiment 1

This embodiment of this application provides a wireless charging receiver. Specific descriptions are provided below with reference to accompanying drawings.

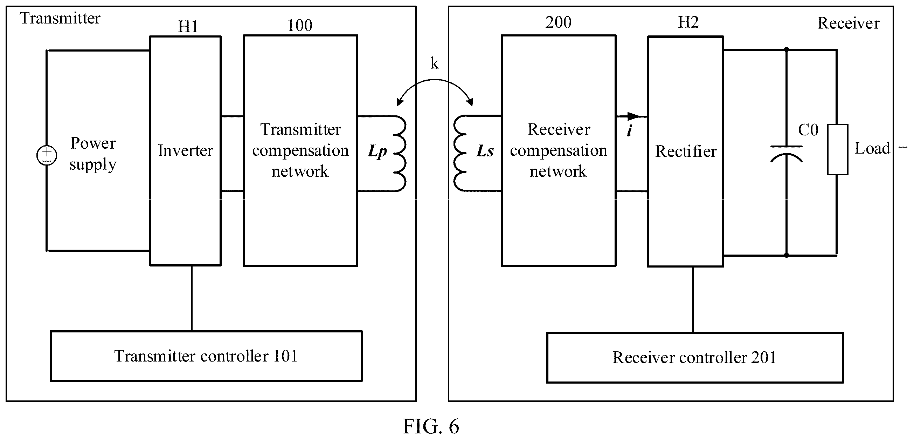

FIG. 6 is a schematic diagram of a wireless charging system corresponding to a wireless charging receiver according to this embodiment of this application.

The wireless charging receiver includes a receiver coil Ls, a receiver compensation network 200 (simply referred to as a compensation network 200 below), a rectifier H2, and a receiver controller 201.

The receiver coil Ls converts an alternating magnetic field transmitted by a transmitter to an alternating current, and delivers the alternating current to the compensation network 200.

The compensation network 200 compensates the alternating current, and then delivers the compensated alternating current to the rectifier H2.

The rectifier H2 rectifies the compensated alternating current to a direct current, and supplies the direct current to a load.

The compensation network is a compensation circuit with a current source characteristic. The current source characteristic of the compensation network 200 determines that an input current of the rectifier is directly proportional to an output voltage of an inverter of the transmitter. Due to the current source characteristic of the compensation network 200, the receiver coil Ls and the compensation network 200, acting together with the transmitter, make an input end of the rectifier H2 a constant current source. For a transmitter compensation network 100 and the receiver compensation network 200, the foregoing compensation network may be used, and details are not described herein in this embodiment of this application again. The rectifier H2 and the load form an equivalent load, and therefore, a current i that is input to the rectifier H2 is independent of impedance of the equivalent load.

The wireless charging system includes three states: an "off state", a "standby state", and a "charging state". Switching from the "standby state" or the "off state" to the "charging state" is referred to as a turn-on process. A process of switching from the "charging state" to the "standby state" or the "off state" is referred to as a turn-off process in the following descriptions of this application. It can be understood that, in actual application, when switching from the "off state" to the "charging state", the receiver may first switch from the "off state" to the "standby state", and then switch from the "standby state" to the "charging state".

Switching from the "charging state" to the "standby state" is normal turn-off. When an auxiliary power supply (not shown in the figure) of the receiver is powered off, the auxiliary power supply cannot supply power to the controller. In this case, the receiver needs to switch from the "charging state" or the "standby state" to the "off" state.

To prevent the load and the receiver from being damaged by an excessively high voltage at two ends of the load when the load is open-circuited, in this application, the receiver controller 201 controls a switching tube of the rectifier, so as to bypass the load of the receiver during turn-on of the receiver or turn-off of the receiver. The following specifically describes a working principle of the controller.

During turn-on of the receiver, the receiver controller 201 controls the switching tube of the rectifier H2 to be closed, so that the load is bypassed. The controlled switching tube is a switching tube of an upper half bridge arm of the rectifier H2 or a switching tube of a lower half bridge arm of the rectifier H2. The receiver controller 201 sends a PWM (Pulse width modulation, pulse width modulation) signal as a drive signal to each switching tube of the rectifier H2, to control each switching tube.

The rectifier H2 may be a full-bridge rectifier, or may be a half-bridge rectifier. When the rectifier H2 is a full-bridge rectifier, the rectifier H2 includes two bridge arms, and therefore, correspondingly includes two upper half bridge arms and two lower half bridge arms. When the rectifier H2 is a half-bridge rectifier, the rectifier H2 includes one bridge arm, and therefore, correspondingly includes one upper half bridge arm and one lower half bridge arm.

For example, as shown in FIG. 1, the rectifier H2 includes four controllable switching tubes S1 to S4. In this case, the receiver controller 201 may control switching tubes S1 and S3 of the upper half bridge arms to be closed, or control switching tubes S2 and S4 of the lower half bridge arms to be closed. In this case, the load is bypassed, an output end of the compensation network 200 is short-circuited, and no current flows through the load. Therefore, there is no excessively high voltage at the two ends of the load during turn-on of the transmitter. This protects the load and the receiver from damage.

During turn-on of the receiver, when the two upper half bridge arms of the rectifier H2 both include controllable switching tubes, the receiver controller 201 needs to control the controllable switching tubes of the two upper half bridge arms to be simultaneously closed. The controllable switching tubes can be simultaneously closed provided that drive signals of the two controllable switching tubes are kept synchronous. Likewise, when the two lower half bridge arms of the rectifier H2 both include controllable switching tubes, the receiver controller 201 controls the controllable switching tubes of the two lower half bridge arms to be simultaneously closed, which can be implemented provided that drive signals of the two controllable switching tubes are kept synchronous.

After confirming that the switching tube of the upper half bridge arm of the rectifier H2 or the switching tube of the lower half bridge arm is closed, the receiver controller 201 controls the receiver to start working, that is, controls the rectifier H2 to enter a normal rectifying state, to charge the load.

Specifically, the receiver controller 201 may further notify the wireless charging transmitter to start a wireless charging procedure. In actual application, the receiver controller 201 may send a charging request to a communication module of the transmitter by using a communication module of the receiver, to indicate that the receiver has completed preparation work of wireless charging, and the transmitter may start the wireless charging procedure. When receiving the charging request, the communication module of the transmitter may notify a transmitter controller 101 to start the wireless charging procedure.

During turn-off of the receiver, the receiver controller 201 controls a switching tube of the rectifier H2 to be closed, so that the load is bypassed, and then controls the receiver to enter the off state. The controlled switching tube is the switching tube of the upper half bridge arm of the rectifier H2 or the switching tube of the lower half bridge arm.

Still refer to FIG. 1. When the full-bridge rectifier H2 includes the controllable switching tubes S1 to S4, during turn-off of the receiver, the receiver controller 201 may control the switching tubes S1 and S3 of the upper half bridge arms to be closed, or control the switching tubes S2 and S4 of the lower half bridge arms to be closed. In this case, the load is bypassed, and no current flows through the load. Therefore, there is no excessively high voltage at the two ends of the load during turn-on of the transmitter. This protects the load and the receiver from damage.

During turn-off of the receiver, to improve safety of the wireless charging system, when the two upper half bridge arms of the rectifier H2 both include controllable switching tubes, the receiver controller 201 controls the controllable switching tubes of the two upper half bridge arms to be simultaneously closed, which can be implemented provided that drive signals of the controllable switching tubes of the two upper half bridge arms are kept synchronous; when the two lower half bridge arms of the rectifier H2 both include controllable switching tubes, the receiver controller 201 controls the controllable switching tubes of the two lower half bridge arms to be simultaneously closed, which can be implemented provided that drive signals of the two controllable switching tubes are kept synchronous.

It can be understood that the receiver controller 201 provided in this application is located in the transmit control module 1000a3 in FIG. 3.

A type of the controllable switching tube may be any one of the following: a relay, an insulated gate bipolar transistor (Insulated Gate Bipolar Transistor, IGBT), a metal-oxide semiconductor field-effect transistor (Metal Oxide Semiconductor Field Effect Transistor, MOSFET, MOS transistor for short below), a SiC MOSFET (Silicon Carbide Metal Oxide Semiconductor Field Effect Transistor, silicon carbide metal oxide semiconductor field effect transistor), or the like. When the switching tube is a MOS transistor, the switching tube may be specifically a PMOS transistor or an NMOS transistor. This is not specifically limited in this embodiment of this application.

In the wireless charging receiver provided in this embodiment of this application, during turn-on of the receiver, the receiver controller controls the switching tube of the upper half bridge arm of the rectifier or the switching tube of the lower half bridge arm to be closed, so that the load is bypassed. In this case, no current flows through the load, and therefore, there is no excessively high voltage at the two ends of the load during turn-on of the transmitter. This protects the load from damage. In addition, the other half bridge arm of the rectifier is also bypassed, so that no current flows through the other half bridge arm, and therefore, there is no excessively high voltage at two ends of the other half bridge arm during turn-on of the transmitter. This protects the rectifier, that is, protects the receiver, during turn-on of the receiver. Then, the controller controls the receiver to start working for wireless charging. During turn-off of the receiver, the controller controls the switching tube of the upper half bridge arm of the rectifier or the switching tube of the lower half bridge arm to be closed, so that the load is bypassed. In this case, no current flows through the load. Then, the controller controls the receiver to enter the off state. Therefore, there is no excessively high voltage at the two ends of the load during turn-off of the transmitter. This protects the load from damage during turn-off of the transmitter. In addition, the other half bridge arm of the rectifier is also bypassed, so that no current flows through the other half bridge arm of the rectifier, and therefore, there is no excessively high voltage at two ends of the other half bridge arm during turn-off of the transmitter. This protects the rectifier, that is, protects the receiver, during turn-off of the receiver.

To sum up, with the wireless charging receiver provided in this embodiment of this application, smooth switching can be implemented during turn-on or turn-off of the receiver, so that the receiver and the load are protected from damage, thereby improving safety of the wireless charging system.

The following describes, with reference to a specific structure of a rectifier, a control principle according to which a receiver controller controls working of a switching tube of the rectifier.

### Receiver Embodiment 2

The following provides descriptions by using an example in which a rectifier is a full-bridge rectifier, and all switching tubes of an upper half bridge arm and a lower half bridge arm of each bridge arm are controllable switching tubes.

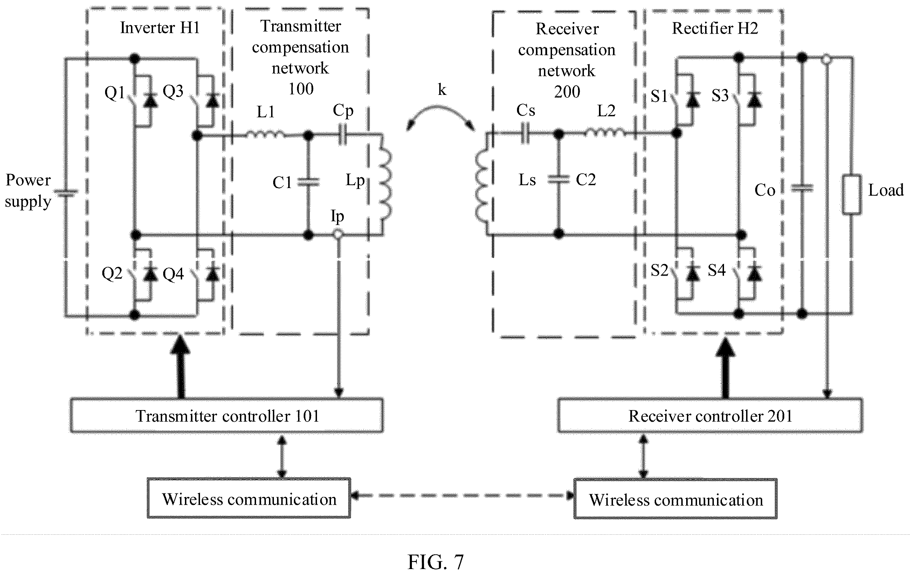

FIG. 7 is a schematic diagram of a wireless charging system corresponding to another wireless charging receiver according to this embodiment of this application.

A wireless charging transmitter includes a power supply, an inverter H1, a transmitter compensation network 100, a transmitter coil Lp, and a transmitter controller 101.

The wireless charging receiver includes a receiver coil Ls, a receiver compensation network 200, a rectifier H2, an output filter capacitor Co, a load, and a receiver controller 201.

The transmitter compensation network 100 includes L1, C1, and Cp, and is an LCC-type compensation network; and the receiver compensation network 200 includes L2, C2, and Cs, and is also an LCC-type compensation network, so that an output of the wireless charging system has a current source characteristic.

It can be understood that this embodiment of this application is described by using an example in which a combination of the compensation networks and coils of the transmitter and the receiver is LCCL-LCCL. In actual application, a combination of the compensation networks and coils of the transmitter and the receiver may alternatively be a combination, for example, LCL-LCL, LCCL-LCL, LCL-LCCL, LCCL-P, LCL-P, or S-S. When any of the foregoing combinations is applied, a control principle of the receiver controller is similar, and details are not described in this application.

The transmitter and the receiver of the wireless charging system respectively have the corresponding controllers. The receiver controller 201 controls an output voltage (or an output current or output power) of the system, and can generate a current reference signal of the transmitter coil, thereby controlling conduction and turn-off of a controllable switching tube of the rectifier H2. The transmitter controller 101 controls a current of the transmitter coil by controlling conduction and turn-off of a controllable switching tube of the inverter H1. The receiver generates a corresponding current at an input end of the rectifier H2 based on a magnitude of the current of the transmitter coil, so that the receiver performs phase locking based on the current. The transmitter controller 101 and the receiver controller 201 transfer control signals through wireless communication. In actual application, the receiver may communicate with a wireless communication module of the transmitter by using a wireless communication module of the receiver.

The rectifier H2 of the receiver includes two bridge arms, and all switching tubes of an upper half bridge arm and a lower half bridge arm of each bridge arm are controllable switching tubes. In the figure, for example, S1 and S2 are located on one bridge arm, S3 and S4 are located on one bridge arm, S1 and S3 are located on upper half bridge arms, and S2 and S4 are located on lower half bridge arms.

The following specifically describes a sequence of controlling the controllable switching tubes of the rectifier H2 by the receiver controller in turn-on and turn-off processes of the receiver to ensure that the wireless charging system can work reliably.

A control principle of the receiver controller during turn-on of the receiver is first described.

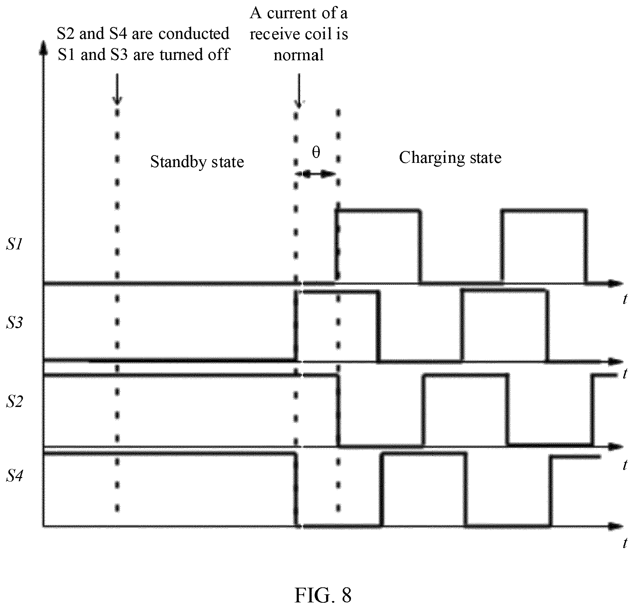

FIG. 8 is a schematic diagram of a control sequence of the rectifier and the controllable switching tubes in a turn-on process of the receiver according to Embodiment 2 of this application.

Turn-on of the receiver means that the receiver switches from a "standby state" or an "off state" to a "charging state". The following provides descriptions by using an example in which the receiver switches from the "standby state" to the "charging state".

When the wireless charging system is in the "standby state", an auxiliary power supply of the receiver is in a working state, and an auxiliary power supply of the transmitter is also in a working state. In the "standby state", when the receiver receives a charging instruction, the receiver controller sends a charging request to the transmitter by using the wireless communication module of the receiver. The transmitter controller receives the charging request and responds by using the wireless communication module of the transmitter, so that the wireless charging system starts a charging procedure.

The receiver controller controls both the switching tubes S1 and S3 of the two upper half bridge arms of the rectifier H2 to be closed, or controls both the switching tubes S2 and S4 of the two lower half bridge arms to be closed, so that the load is bypassed.

In this embodiment of this application, descriptions are provided by using an example in which the controllable switching tubes of the rectifier H2 are MOS transistors and are specifically NMOS transistors, and the receiver controller 201 controls both the switching tubes S2 and S4 of the two lower half bridge arms of the rectifier H2 to be closed. When the controllable switching tube is an NMOS transistor, the controllable switching tube is conducted when a drive signal of the controllable switching tube is of a high level, and the controllable switching tube is off when a drive signal of the controllable switching tube is of a low level.

When the receiver controller 201 controls both the switching tubes S2 and S4 of the two lower half bridge arms of the rectifier H2 to be closed, this corresponds to the following: before a dashed line pointed by an arrow of "A current of a receiver coil is normal" in the figure, drive signals of S1 and S3 are of a low level, and drive signals of S2 and S4 are of a high level. In this case, no current flows through the load, and therefore, there is no excessively high voltage at two ends of the load during turn-on of the transmitter. This protects the load from damage.

The receiver controller 201 keeps controlling the switching tubes of the rectifier H2 until the transmitter is started. When a first preset current is generated on the transmitter coil, the receiver controller gradually increases a phase-shift angle θ between the two bridge arms, so that the wireless charging system enters the "charging state", and starts to charge the load. This process corresponds to the following: After the dashed line pointed by the arrow of "A current of a receiver coil is normal" in the figure, drive signals of S1 and S3 and drive signals of S2 and S4 undergo high-low level transition according to specific logic, and a switching tube of an upper half bridge arm and a switching tube of a lower half bridge arm of each bridge arm are complementarily conducted, that is, S1 and S2 are complementarily conducted, and S3 and S4 are complementarily conducted.

In actual application, when determining that the current of the transmitter coil of the transmitter is greater than a value of the first preset current, the receiver controller 201 may control the phase-shift angle θ between the two bridge arms of the rectifier H2 to gradually increase to a preset value, and control the switching tube of the upper half bridge arm and the switching tube of the lower half bridge arm to be complementarily conducted. The value of the first preset current and the preset value of the phase-shift angle θ may be set based on an actual situation. This is not specifically limited in this embodiment of this application.

A control principle of the receiver controller during turn-off of the receiver is described below.

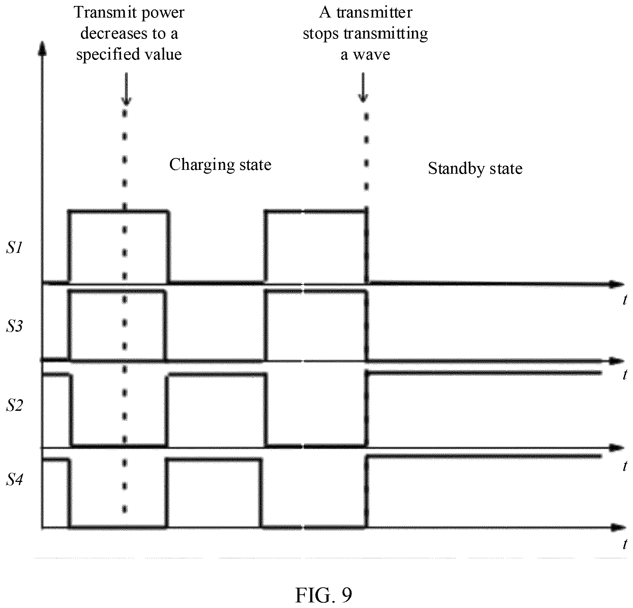

FIG. 9 is a schematic diagram of a control sequence of the rectifier and the controllable switching tubes in a turn-off process of the receiver according to Embodiment 2 of this application.

The example in which the controllable switching tubes of the rectifier H2 are MOS transistors and are specifically NMOS transistors is still used for description.

In the "charging state", when the receiver receives a turn-off instruction or the receiver receives a fault alarm indicating that the auxiliary power supply is powered off, the receiver controller 201 sends the turn-off instruction to the transmitter controller 101 by using the wireless communication module, to start a turn-off procedure. The transmitter gradually decreases the current of the transmitter coil until the current is less than a second preset current and greater than the first preset current.

When the current of the transmitter coil gradually decreases to a value less than the second preset current and greater than the first preset current, the receiver controller 201 starts to adjust a drive signal for the rectifier H2. Specifically, the receiver controller 201 controls the phase-shift angle between the two bridge arms of the rectifier H2 to gradually decrease from θ to 0, to make drive signals of S1 and S3 completely synchronous, drive signals of S2 and S4 completely synchronous, and a drive signal of S1 and a drive signal of S2 complementarily conducted. This corresponds to levels of drive signals of the switching tubes before a dashed line pointed by an arrow of "A transmitter stops transmitting a wave" in the figure.

In this case, because the switching tubes S1 and S3 of the two upper half bridge arms of the rectifier H2 and the switching tubes S2 and S4 of the two lower half bridge arms are complementarily conducted, the load is bypassed, that is, no current flows through the load, and there is no excessively high voltage at the two ends of the load. This protects the load and the receiver from damage.

The receiver controller 201 continues the foregoing control on the switching tubes until the transmitter stops transmitting a wave, that is, until the transmitter stops outputting power. After the "transmitter stops transmitting a wave", S2 and S4 are kept conducted, S1 and S3 are turned off, and the standby state is entered. This corresponds to the following: After the dashed line pointed by the arrow of "A transmitter stops transmitting a wave" in the figure, drive signals of S1 and S3 are of a low level, and drive signals of S2 and S4 are of a high level.

It can be understood that the foregoing descriptions are provided by using an example in which, after the phase-shift angle between the front and rear bridge arms decreases to zero, the switching tubes S2 and S4 of the two lower half bridge arms are kept conducted for a long time, and the switching tubes S1 and S3 of the two upper half bridge arms are turned off. Alternatively, the switching tubes S1 and S3 of the two upper half bridge arms may be kept conducted, and the switching tubes S2 and S4 of the two lower half bridge arms may be turned off. Details are not described herein in this embodiment of this application.

The rectifier of the wireless charging receiver provided in this embodiment of this application includes the two bridge arms, and each of an upper half bridge arm and a lower half bridge arm of each bridge arm includes one controllable switching tube. During turn-on of the receiver, because the wireless charging transmitter, the receiver coil, and the compensation network of the receiver can be equivalent to a current source, when the load is open-circuited, an excessively high voltage is caused at the two ends of the load, and consequently, the load and the receiver may be damaged. Therefore, the controller of the receiver controls both the two switching tubes of the upper half bridge arms of the rectifier or the two switching tubes of the lower half bridge arms to be closed, so that the load is bypassed, that is, no current flows through the load, and therefore, there is no excessively high voltage at the two ends of the load during turn-on of the transmitter. This protects the load from damage. In addition, the other half bridge arms of the rectifier are also bypassed, so that no current flows through the other half bridge arm, and therefore, there is no excessively high voltage at two ends of the other half bridge arm during turn-on of the transmitter. This protects the rectifier, that is, protects the receiver, during turn-on. During turn-off of the receiver, the controller controls the two switching tubes of the upper half bridge arms of the rectifier or the two switching tubes of the lower half bridge arms to be closed, so that the load is bypassed. In this case, no current flows through the load, and therefore, there is no excessively high voltage at the two ends of the load during turn-off of the transmitter. This protects the load from damage during turn-off of the transmitter. In addition, the other half bridge arms of the rectifier are also bypassed, so that no current flows through the other half bridge arm, and therefore, there is no excessively high voltage at two ends of the other half bridge arm during turn-off of the transmitter. This protects the rectifier during turn-off.

To sum up, with the wireless charging receiver provided in this application, the receiver and the load can be protected from damage during turn-on or turn-off of the receiver, thereby improving safety of the wireless charging system.

The foregoing embodiment is described by using an example in which the rectifier includes the two bridge arms, and each of an upper half bridge arm and a lower half bridge arm of each bridge arm includes one controllable switching tube. The following describes, with reference to accompanying drawings, a working principle of a receiver controller when a rectifier includes two bridge arms, two upper half bridge arms include uncontrollable diodes, and two lower half bridge arms include controllable switching tubes.

### Receiver Embodiment 3

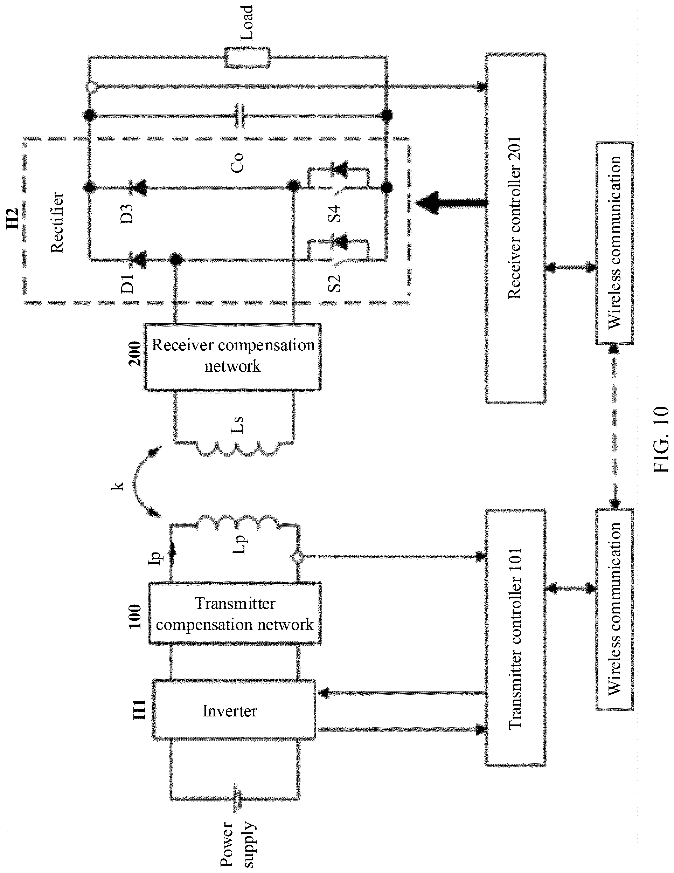

FIG. 10 is a schematic diagram of a wireless charging system corresponding to still another wireless charging receiver according to Embodiment 3 of this application.

A wireless charging transmitter includes a power supply, an inverter H1, a transmitter compensation network 100, a transmitter coil Lp, and a transmitter controller 101.

The wireless charging receiver includes a receiver coil Ls, a receiver compensation network 200, a rectifier H2, an output filter capacitor Co, a load, and a receiver controller 201.

For descriptions of the transmitter compensation network 100 and the receiver compensation network 200, refer to the foregoing embodiment. Details are not described herein in this embodiment of this application again.

The transmitter and the receiver of the wireless charging system respectively have the corresponding controllers. The receiver controller 201 controls an output voltage (or an output current or output power) of the system, and can generate a current reference signal of the transmitter coil, thereby controlling conduction and turn-off of a controllable switching tube of the rectifier H2. The transmitter controller 101 controls a current of the transmitter coil by controlling conduction and turn-off of a controllable switching tube of the inverter H1. The receiver generates a corresponding current at an input end of the rectifier based on a magnitude of the current of the transmitter coil, so that the receiver performs phase locking based on the current. The transmitter controller 101 and the receiver controller 201 transfer control signals through wireless communication. In actual application, the receiver may communicate with a wireless communication module of the transmitter by using a wireless communication module of the receiver.

The rectifier H2 of the receiver includes two bridge arms, an upper half bridge arm of each bridge arm includes one uncontrollable diode, and a lower half bridge arm of each bridge arm includes one controllable switching tube. In the figure, for example, a diode D1 and a switching tube S2 are located on one bridge arm, and a diode D3 and a switching tube S4 are located on one bridge arm.

The following specifically describes a sequence of controlling the controllable switching tubes of the rectifier H2 by the receiver controller in turn-on and turn-off processes of the receiver to ensure that the wireless charging system can work reliably.

A control principle of the receiver controller during turn-on of the receiver is first described.

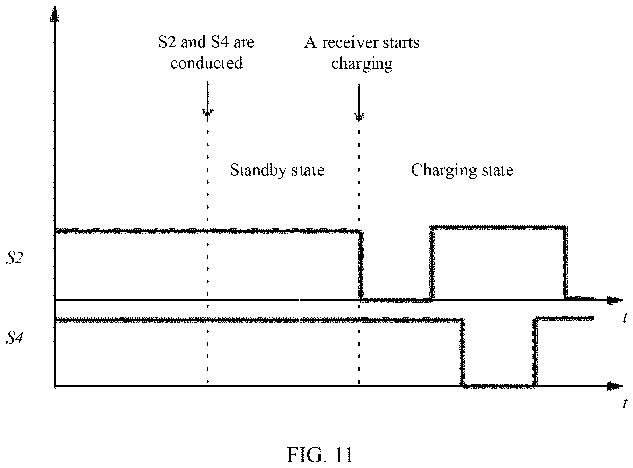

FIG. 11 is a schematic diagram of a control sequence of the rectifier and the controllable switching tubes in a turn-on process of the receiver according to Embodiment 3 of this application.

An example in which the controllable switching tubes of the rectifier H2 are MOS transistors and are specifically NMOS transistors is used for description.

Turn-on of the receiver means that the receiver switches from a "standby state" or an "off state" to a "charging state". The following provides descriptions by using an example in which the receiver switches from the "standby state" to the "charging state".

In the "standby state", when the receiver receives a charging instruction, the receiver controller 201 controls both the controllable switching tubes S2 and S4 of two lower half bridge arms of the rectifier H2 to be closed. In this case, duty cycles of drive signals of the controller for the controllable switching tubes S2 and S4 are 100%, so that the load is bypassed. In this case, no current flows through the load, and therefore, there is no excessively high voltage at two ends of the load during turn-on of the transmitter. This protects the load from damage. In addition, D1 and D3 of upper half bridge arms are also bypassed, so that no current flows through the upper half bridge arm. There is no excessively high voltage at two ends of the upper half bridge arm during turn-on of the transmitter. This protects the rectifier, that is, protects the receiver.

When the wireless charging system is in the "standby state", an auxiliary power supply of the receiver is in a working state, and an auxiliary power supply of the transmitter is also in a working state. The receiver controller 201 sends a charging request to the transmitter by using the wireless communication module of the receiver. The transmitter controller 101 receives the charging request by using the wireless communication module of the transmitter, so that the transmitter of the wireless charging system starts a charging procedure. When the transmitter is started, and the current on the transmitter coil is greater than a first preset current, the receiver controller 201 gradually decreases duty cycles of the two switching tubes to a preset value, so that the wireless charging system enters the "charging state", and starts to charge the load. This corresponds to transition of drive signals of S2 and S4 after a dashed line pointed by an arrow of "A receiver starts charging" in the figure.

A value of the first preset current and the preset value of the duty cycle may be set based on an actual situation. This is not specifically limited in this embodiment of this application.

A control principle of the receiver controller during turn-off of the receiver is described below.

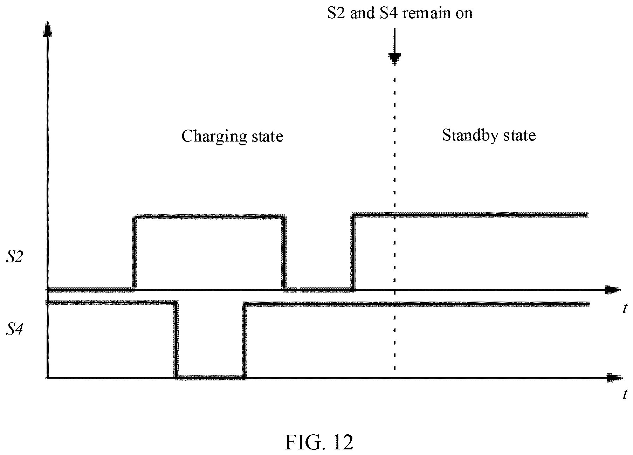

FIG. 12 is a schematic diagram of a control sequence of the rectifier and the controllable switching tubes in a turn-off process of the receiver according to Embodiment 3 of this application.

The example in which the controllable switching tubes of the rectifier H2 are MOS transistors and are specifically NMOS transistors is still used for description.

In the "charging state", when the receiver receives a turn-off instruction or the receiver receives a fault alarm indicating that the auxiliary power supply is powered off, the receiver controller 201 sends the turn-off instruction to the transmitter controller 101 by using the wireless communication module, to start a turn-off procedure. The transmitter gradually decreases the current of the transmitter coil until the current is less than a second preset current and greater than the first preset current.

When the current of the transmitter coil of the transmitter gradually decreases to a value less than the second preset current and greater than the first preset current, the receiver controller 201 starts to adjust a drive signal for the rectifier H2. Specifically, the receiver controller 201 gradually increases duty cycles of drive signals of the two switching tubes S2 and S4 of the lower half bridge arms to 100%, to keep the two lower tubes simultaneously conducted. In this case, the load is bypassed, and no current flows through the load. Therefore, there is no excessively high voltage at the two ends of the load during turn-off of the transmitter. This protects the load from damage. In addition, the two diodes D1 and D3 of the rectifier H2 are also bypassed, so that no current flows through the diode. There is no excessively high voltage at two ends of the diode during turn-on of the transmitter. This protects the rectifier, that is, protects the receiver.

After the receiver controller 201 controls S2 and S4 to be conducted, the transmitter gradually decreases the current of the transmitter coil until the transmitter stops transmitting a wave, that is, stops outputting power. This corresponds to the following: After a dashed line pointed by an arrow of "S2 and S4 remain conducted" in the figure, S2 and S4 remain in a high-level state.

The rectifier of the receiver provided in this embodiment of this application includes the two bridge arms, both the switching tubes of the upper half bridge arms of the two bridge arms are diodes, and both the switching tubes of the lower half bridge arms of the two bridge arms are controllable switching tubes. During turn-on of the receiver, the receiver controller controls both the two switching tubes to be closed, so that the load is bypassed. In this case, no current flows through the load, and therefore, there is no excessively high voltage at the two ends of the load during turn-on of the transmitter. This protects the load from damage. In addition, the two diodes of the rectifier are also bypassed, so that no current flows through the diode. There is no excessively high voltage at two ends of the diode during turn-on of the transmitter. This protects the rectifier, that is, protects the receiver, during turn-on. During turn-off of the receiver, the receiver controller controls both the two switching tubes of the rectifier to be closed, so that the load is bypassed. In this case, no current flows through the load, and therefore, there is no excessively high voltage at the two ends of the load during turn-off of the transmitter. This protects the load from damage during turn-off of the transmitter. In addition, the two diodes of the rectifier are also bypassed, so that no current flows through the diode. There is no excessively high voltage at two ends of the diode during turn-off of the transmitter. This protects the rectifier.

To sum up, with the wireless charging receiver provided in this application, the receiver and the load can be protected from damage during turn-on or turn-off of the receiver, thereby improving safety of the wireless charging system.

The rectifier in the foregoing embodiments includes two bridge arms. The following specifically describes, with reference to accompanying drawings, a working principle of a receiver controller when a rectifier includes only one bridge arm.

The following first describes a working principle of a receiver controller when a rectifier includes only one bridge arm and each of an upper half bridge arm and a lower half bridge arm includes one controllable switching tube.

### Receiver Embodiment 4

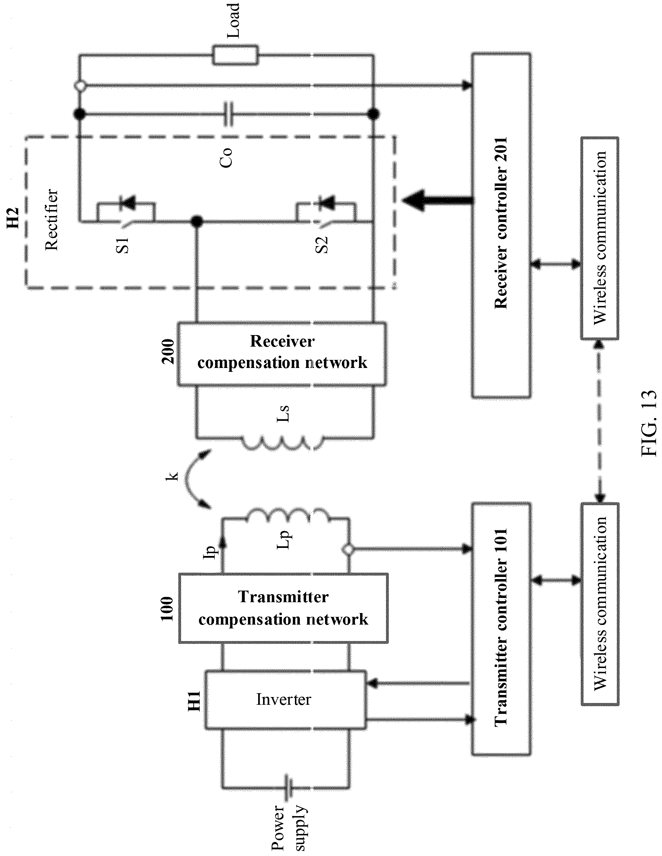

FIG. 13 is a schematic diagram of yet another wireless charging receiver according to Embodiment 4 of this application.

A wireless charging transmitter includes a power supply, an inverter H1, a transmitter compensation network 100, a transmitter coil Lp, and a transmitter controller 101.

The wireless charging receiver includes a receiver coil Ls, a receiver compensation network 200, a rectifier H2, an output filter capacitor Co, a load, and a receiver controller 201.

For descriptions of the transmitter compensation network 100 and the receiver compensation network 200, refer to the foregoing embodiment. Details are not described herein in this embodiment of this application again.

The transmitter and the receiver of the wireless charging system respectively have the corresponding controllers. The receiver controller 201 controls an output voltage (or an output current or output power) of the system, and can generate a current reference signal of the transmitter coil, thereby controlling conduction and turn-off of a controllable switching tube of the rectifier H2. The transmitter controller 101 controls a current of the transmitter coil by controlling conduction and turn-off of a controllable switching tube of the inverter H1. The receiver generates a corresponding current at an input end of the rectifier H2 based on a magnitude of the current of the transmitter coil, so that the receiver performs phase locking based on the current. The transmitter controller 101 and the receiver controller 201 transfer control signals through wireless communication. In actual application, the receiver may communicate with a wireless communication module of the transmitter by using a wireless communication module of the receiver.

The rectifier H2 of the receiver includes one bridge arm, and each of an upper half bridge arm and a lower half bridge arm includes one controllable switching tube. In the figure, for example, the upper half bridge arm includes a switching tube S1, and the lower half bridge arm includes a switching tube S2.

The following specifically describes a sequence of controlling the controllable switching tubes of the rectifier H2 by the receiver controller in turn-on and turn-off processes of the receiver to ensure that the wireless charging system can work reliably.

A control principle of the receiver controller during turn-on of the receiver is first described.

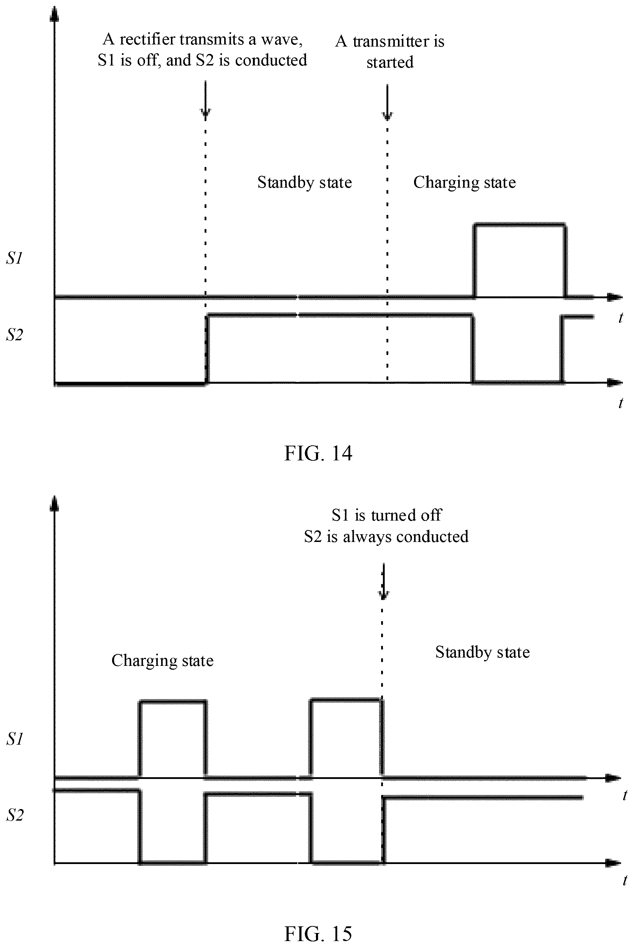

FIG. 14 is a schematic diagram of a control sequence of the rectifier and the controllable switching tubes in a turn-on process of the receiver according to Embodiment 4 of this application.

An example in which the controllable switching tubes of the rectifier H2 are MOS transistors and are specifically NMOS transistors is used for description.

Turn-on of the receiver means that the receiver switches from a "standby state" or an "off state" to a "charging state". The following provides descriptions by using an example in which the receiver switches from the "standby state" to the "charging state".

In the "standby state", when the receiver receives a charging instruction, the receiver controller 201 controls the controllable switching tube S2 of the lower half bridge arm of the rectifier H2 to be closed, so that the load is bypassed. In this case, a duty cycle of a drive signal of the controllable switching tube S2 is 100%. No current flows through the load, and therefore, there is no excessively high voltage at two ends of the load during turn-on of the transmitter. This protects the load from damage. In addition, this corresponds to the following: Before a dashed line pointed by an arrow of "A transmitter is started" in the figure, a drive signal of S2 changes from a low level to a high level; and within a standby time, the drive signal of S2 remains a high-level signal and a drive signal of S1 remains a low-level signal.

When the transmitter is started, and the current of the transmitter coil is greater than a first preset current, the receiver controller 201 gradually adjusts a drive signal for the rectifier H2. Specifically, the controller gradually decreases duty cycles of the two switching tubes S1 and S2 to a preset value, so that the wireless charging system enters the "charging state", and starts to charge the load. This corresponds to drive signals of S2 and S1 after the dashed line pointed by the arrow of "A transmitter is started" in the figure.

A value of the first preset current and the preset value of the duty cycle may be set based on an actual situation. This is not specifically limited in this embodiment of this application.

A control principle of the receiver controller during turn-off of the receiver is described below.

FIG. 15 is a schematic diagram of a control sequence of the rectifier and the controllable switching tubes in a turn-off process of the receiver according to Embodiment 4 of this application.

The example in which the controllable switching tubes of the rectifier H2 are MOS transistors and are specifically NMOS transistors is still used for description.

In the "charging state", when the receiver receives a turn-off instruction or the receiver receives a fault alarm indicating that an auxiliary power supply is powered off, the receiver controller 201 sends the turn-off instruction to the transmitter controller by using the wireless communication module, to start a turn-off procedure. The transmitter gradually decreases the current of the transmitter coil until the current is less than a second preset current and greater than the first preset current.

When the current of the transmitter coil of the transmitter gradually decreases to a value less than the second preset current and greater than the first preset current, the receiver controller 201 starts to adjust a drive signal for the rectifier H2. Specifically, the receiver controller 201 gradually increases duty cycles of drive signals for the two switching tubes S2 and S4 until the duty cycle is 100%, and makes a drive signal of S2 remain a high-level signal and a drive signal of S1 remain a low-level signal. That is, S2 remains in a conducted state, and S1 remains in an off state. In this case, the load is bypassed, and no current flows through the load. Therefore, there is no excessively high voltage at the two ends of the load during turn-off of the transmitter. This protects the load from damage. In addition, the switching tube S1 of the rectifier H2 is also bypassed. There is no excessively high voltage at two ends of S1 during turn-off of the transmitter. This protects the rectifier, that is, protects the receiver.

The rectifier of the receiver provided in this embodiment of this application includes only one bridge arm, and each of the upper half bridge arm and the lower half bridge arm includes one controllable switching tube. During turn-on of the receiver, the receiver controller controls the switching tube of the upper half bridge arm of the rectifier to be closed, so that the load and the other unclosed switching tube are bypassed. Therefore, damage to the load and the rectifier caused by an excessively high voltage can be avoided during turn-on of the receiver. During turn-off of the receiver, the receiver controller controls the switching tube of the lower half bridge arm of the rectifier to be closed, so that the load and the other unclosed switching tube are bypassed. Therefore, damage to the load and the rectifier caused by an excessively high voltage can be avoided during turn-off of the receiver.

To sum up, with the wireless charging receiver provided in this application, the receiver and the load can be protected from damage during turn-on or turn-off of the receiver, thereby improving safety of the wireless charging system.

The foregoing embodiment describes a working principle of the receiver controller when the rectifier includes only one bridge arm and each of the upper half bridge arm and the lower half bridge arm includes one controllable switching tube. The following describes a working principle of a receiver controller when a rectifier includes only one bridge arm and the bridge arm includes one controllable switching tube and one diode.

### Receiver Embodiment 5

This embodiment of this application is described by using an example in which an upper half bridge arm includes a diode and a lower half bridge arm includes a controllable switching tube.

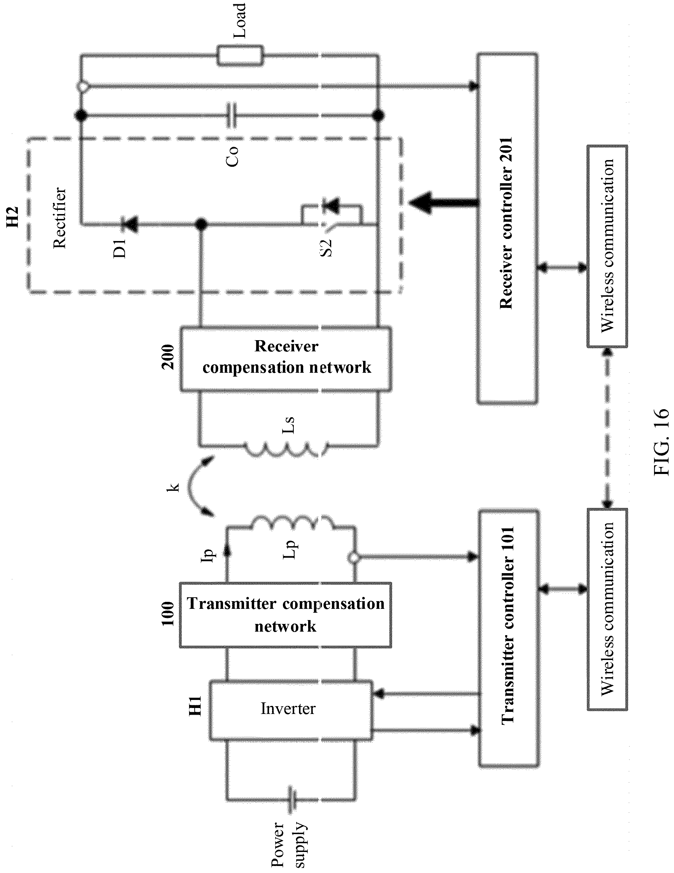

FIG. 16 is a schematic diagram of a wireless charging system corresponding to another wireless charging receiver according to Embodiment 5 of this application.

A wireless charging transmitter includes a power supply, an inverter H1, a transmitter compensation network 100, a transmitter coil Lp, and a transmitter controller 101.

The wireless charging receiver includes a receiver coil Ls, a receiver compensation network 200, a rectifier H2, an output filter capacitor Co, a load, and a receiver controller 201.

For descriptions of the transmitter compensation network 100 and the receiver compensation network 200, refer to the foregoing embodiment. Details are not described herein in this embodiment of this application again.

The transmitter and the receiver of the wireless charging system respectively have the corresponding controllers. The receiver controller 201 controls an output voltage (or an output current or output power) of the system, and can generate a current reference signal of the transmitter coil, thereby controlling conduction and turn-off of a controllable switching tube of the rectifier H2. The transmitter controller 101 controls a current of the transmitter coil by controlling conduction and turn-off of a controllable switching tube of the inverter H1. The receiver generates a corresponding current at an input end of the rectifier based on a magnitude of the current of the transmitter coil, so that the receiver performs phase locking based on the current. The transmitter controller 101 and the receiver controller 201 transfer control signals through wireless communication. In actual application, the receiver may communicate with a wireless communication module of the transmitter by using a wireless communication module of the receiver.

The rectifier H2 of the receiver includes one bridge arm, an upper half bridge arm includes a diode D1, and a lower half bridge arm includes a controllable switching tube S2.

The following specifically describes a sequence of controlling the controllable switching tube of the rectifier H2 by the receiver controller in turn-on and turn-off processes of the receiver to ensure that the wireless charging system can work reliably.

A control principle of the receiver controller during turn-on of the receiver is first described.

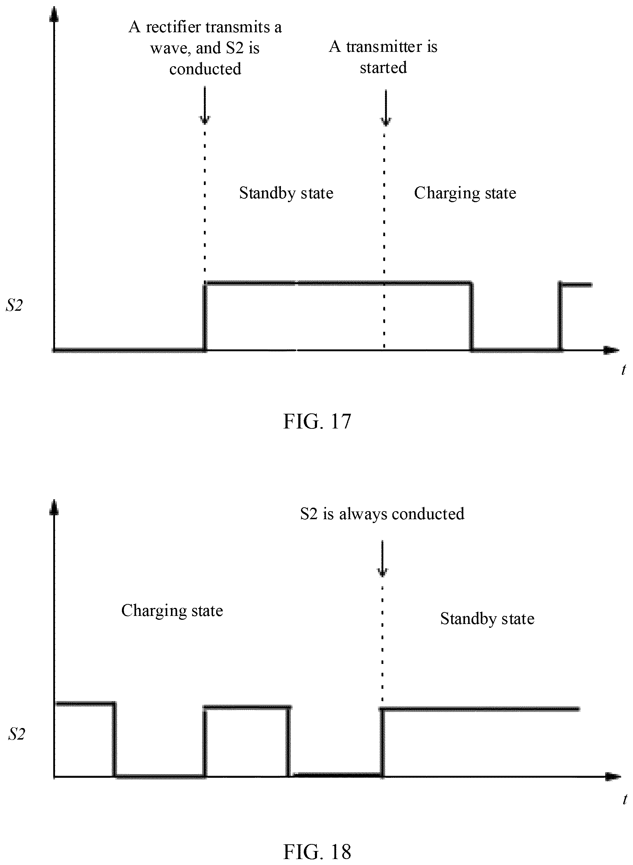

FIG. 17 is a schematic diagram of a control sequence of the rectifier and the controllable switching tube in a turn-on process of the receiver according to Embodiment 5 of this application.

An example in which the controllable switching tube of the rectifier H2 is a MOS transistor and is specifically an NMOS transistor is used for description.

Turn-on of the receiver means that the receiver switches from a "standby state" or an "off state" to a "charging state". The following provides descriptions by using an example in which the receiver switches from the "standby state" to the "charging state".

In the "standby state", when the receiver receives a charging instruction, the receiver controller 201 controls the controllable switching tube S2 of the lower half bridge arm of the rectifier H2 to be closed, so that the load is bypassed. In this case, a duty cycle of a drive signal of the controllable switching tube S2 is 100%. No current flows through the load, and therefore, there is no excessively high voltage at two ends of the load during turn-on of the transmitter. This protects the load from damage. In addition, the diode D1 of the upper half bridge arm is also bypassed, so that no current flows through the upper half bridge arm. There is no excessively high voltage at two ends of the diode D1 during turn-on of the transmitter. This protects the rectifier, that is, protects the receiver. This corresponds to the following: Before a dashed line pointed by an arrow of "A transmitter is started" in the figure, a drive signal of S2 changes from a low level to a high level, and the drive signal of S2 remains a high-level signal within a standby time.

When the transmitter is started, and the current of the transmitter coil is greater than a first preset current, the receiver controller 201 gradually adjusts a drive signal for the rectifier H2. Specifically, the controller gradually decreases a duty cycle of a drive signal of the switching tube S1 to a preset value, so that the wireless charging system enters the "charging state", and starts to charge the load. This corresponds to a drive signal of S2 after the dashed line pointed by the arrow of "A transmitter is started" in the figure.

A value of the first preset current and the preset value of the duty cycle may be set based on an actual situation. This is not specifically limited in this embodiment of this application.

FIG. 18 is a schematic diagram of a control sequence of the rectifier and the controllable switching tube in a turn-off process of the receiver according to Embodiment 5 of this application.

The example in which the controllable switching tube of the rectifier H2 is a MOS transistor and is specifically an NMOS transistor is still used for description.

In the "charging state", when the receiver receives a turn-off instruction or the receiver receives a fault alarm indicating that an auxiliary power supply is powered off, the receiver controller 201 sends the turn-off instruction to the transmitter controller 101 by using the wireless communication module, to start a turn-off procedure. The transmitter gradually decreases the current of the transmitter coil until the current is less than a second preset current and greater than the first preset current.

When the current of the transmitter coil of the transmitter gradually decreases to a value less than the second preset current and greater than the first preset current, the receiver controller 201 starts to adjust a drive signal for the rectifier H2. Specifically, the receiver controller 201 gradually increases a duty cycle of a drive signal of the switching tube S2 until the duty cycle is 100%, and controls the drive signal of S2 to be always of a high level. In this case, S2 remains in a conducted state, the load is bypassed, and no current flows through the load. Therefore, there is no excessively high voltage at the two ends of the load during turn-off of the transmitter. This protects the load from damage. In addition, the diode D1 of the rectifier is also bypassed. There is no excessively high voltage at two ends of D1 during turn-off of the transmitter. This protects the rectifier, that is, protects the receiver.

The rectifier of the receiver provided in this embodiment of this application includes only one bridge arm, and the bridge arm includes one controllable switching tube and one diode. During turn-on of the receiver, the receiver controller controls the switching tube of the lower half bridge arm of the rectifier to be closed, so that the load and the diode are bypassed. Therefore, damage to the load and the rectifier caused by an excessively high voltage can be avoided during turn-on of the receiver. During turn-off of the receiver, the receiver controller controls the switching tube of the lower half bridge arm of the rectifier to be closed, so that the load and the diode are bypassed. Therefore, damage to the load and the rectifier caused by an excessively high voltage can be avoided during turn-off of the receiver.

To sum up, with the wireless charging receiver provided in this application, the receiver and the load can be protected from damage during turn-on or turn-off of the receiver, thereby improving safety of the wireless charging system.

### System embodiment

Based on the wireless charging receiver provided in the foregoing embodiments, embodiments of this application further provide a wireless charging system. The following provides specific descriptions with reference to accompanying drawings.

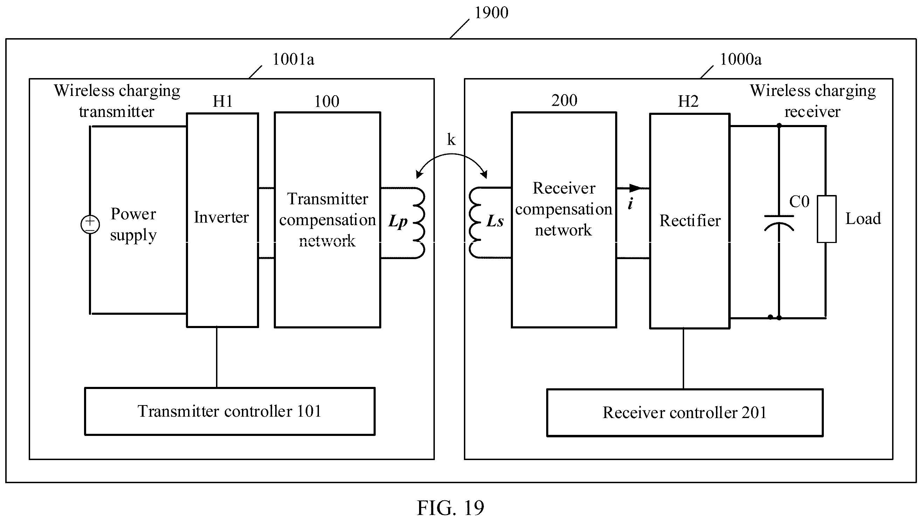

FIG. 19 is a schematic diagram of a wireless charging system according to an embodiment of this application.

The wireless charging system 1900 includes a wireless charging receiver 1000a and a wireless charging transmitter 1001a.

The wireless charging transmitter 1001a includes at least an inverter H1, a transmitter coil Lp, a transmitter compensation network 100, and a transmitter controller 101.

The inverter H1 converts a direct current that is output by a direct current power supply to an alternating current.

The transmitter compensation network 100 compensates the alternating current, and then delivers the compensated alternating current to the transmitter coil Lp.

The transmitter coil Lp transmits the compensated alternating current in a form of an alternating magnetic field.

The transmitter controller 101 controls closing of a controllable switching tube of the inverter H1, so that the transmitter coil Lp generates a transmit current needed by the receiver; and is further configured to receive a turn-on request or turn-off request sent by the receiver controller 201 or send a turn-on request or turn-off request to the receiver controller 201.

The wireless charging receiver 1000a is configured to receive an alternating magnetic field transmitted by the wireless charging transmitter 1001a, and convert the alternating magnetic field to a direct current, to supply the direct current to the load. The wireless charging receiver 1000a includes a receiver coil Ls, a rectifier H2, and a receiver controller 201.

The receiver coil Ls receives electromagnetic energy transmitted by the transmitter coil Lp, in a form of an alternating magnetic field.

The receiver compensation network 200 compensates an alternating current, and then delivers the compensated alternating current to the rectifier H2.

The rectifier H2 rectifies, to a direct current, an alternating current that is output by the receiver coil Ls, and outputs the direct current to the load.

The compensation network 200 is a compensation circuit with a current source characteristic, so that the receiver coil Ls and the compensation network 200, acting together with the transmitter, make an input end of the rectifier H2 a constant current source.

When performing turn-on and turn-off control, the receiver needs to monitor a magnitude of a current of the transmitter coil. Therefore, the transmitter controller 101 needs to send the current of the transmitter coil Lp to the receiver controller 201. It can be understood that the transmitter controller 101 and the receiver controller 201 wirelessly communicate with each other. A specific communication manner is not specifically limited in this embodiment of this application.

The rectifier H2 of the wireless charging receiver may be any rectifier provided in the foregoing receiver embodiments, including the following cases: The rectifier includes two bridge arms, and all switching tubes of an upper half bridge arm and a lower half bridge arm of each bridge arm are controllable switching tubes; or the rectifier includes two bridge arms, two upper half bridge arms include uncontrollable diodes, and two lower half bridge arms include controllable switching tubes; or the rectifier includes only one bridge arm, and each of an upper half bridge arm and a lower half bridge arm includes one controllable switching tube; or the rectifier includes only one bridge arm, a lower half bridge arm of the bridge arm includes one controllable switching tube, and an upper half bridge arm of the bridge arm includes one diode.

The wireless charging system may be applied to the scenario shown in FIG. 2. To be specific, the load of the wireless charging receiver may be an electric vehicle, the wireless charging receiver may be located on the electric vehicle, and the wireless charging transmitter is located at a wireless charging station.

The wireless charging system provided in this embodiment of this application includes the wireless charging receiver provided in the foregoing embodiments. During turn-on of the receiver, the receiver controller controls a switching tube of the upper half bridge arm of the rectifier or a switching tube of the lower half bridge arm to be closed, so that the load is bypassed. In this case, no current flows through the load, and therefore, there is no excessively high voltage at two ends of the load during turn-on of the transmitter. This protects the load from damage. In addition, the other half bridge arm of the rectifier is also bypassed, so that no current flows through the other half bridge arm, and therefore, there is no excessively high voltage at two ends of the other half bridge arm during turn-on of the transmitter. This protects the rectifier, that is, protects the receiver, during turn-on. During turn-off of the receiver, the controller controls the switching tube of the upper half bridge arm of the rectifier or the switching tube of the lower half bridge arm to be closed, so that the load is bypassed. In this case, no current flows through the load, and therefore, there is no excessively high voltage at the two ends of the load during turn-off of the transmitter. This protects the load from damage during turn-off of the transmitter. In addition, the other half bridge arm of the rectifier is also bypassed, so that no current flows through the other half bridge arm of the rectifier, and therefore, there is no excessively high voltage at two ends of the other half bridge arm during turn-off of the transmitter. This protects the rectifier, that is, protects the receiver, during turn-off. Then, the controller controls the receiver to enter an off state.

To sum up, with the wireless charging system provided in this embodiment of this application, smooth switching can be implemented during turn-on or turn-off of the receiver, thereby ensuring a normal control sequence in a turn-on/turn-off process of the wireless charging system, to protect the receiver and the load from damage, and further improve safety of the wireless charging system.

### Method embodiment

Based on the wireless charging receiver provided in the foregoing embodiments, embodiments of this application further provide a method for controlling a wireless charging receiver. The following provides specific descriptions with reference to accompanying drawings.

The wireless charging control method provided in this embodiment is applied to a wireless charging receiver. For details, refer to the foregoing receiver embodiments. Details are not described herein again. The receiver includes a receiver coil, a compensation network, and a rectifier. The method includes:
during turn-on of the receiver, controlling a switching tube of the rectifier to be closed, so that a load is bypassed, and then controlling the receiver to start working;
   or
during turn-off of the receiver, controlling a switching tube of the rectifier to be closed, so that a load is bypassed, and then controlling the receiver to enter an off state.

The switching tube is a switching tube of an upper half bridge arm of the rectifier or a switching tube of a lower half bridge arm of the rectifier.

The following first describes a procedure of controlling turn-on of the receiver.

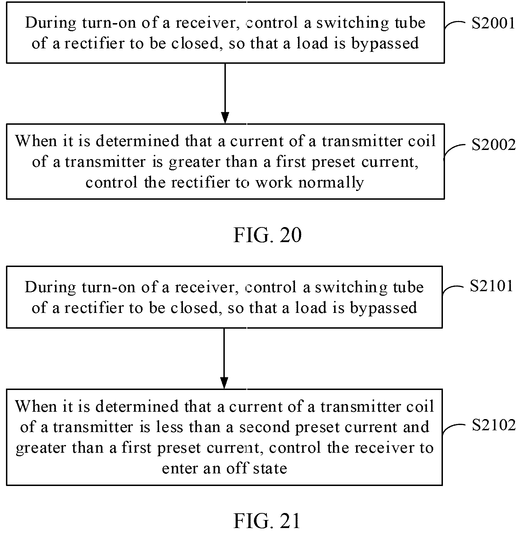

FIG. 20 is a flowchart of a method for turning on the wireless charging receiver according to an embodiment of this application.

S2001: During turn-on of the receiver, control the switching tube of the rectifier to be closed, so that the load is bypassed.

A purpose of bypassing the load is to prevent a current from flowing through the load. Therefore, even if the load is open-circuited, there is no excessively high voltage at two ends of the load during turn-on of a transmitter. This protects the load from damage during turn-on of the transmitter.

S2002: When it is determined that a current of a transmitter coil of the transmitter is greater than a first preset current, control the rectifier to work normally.

Controlling the rectifier to work normally means that the rectifier starts to perform rectification work; in this case, the transmitter normally transmits power, and the rectifier rectifies an alternating current to a direct current to charge the load.

The following describes a procedure of controlling turn-off of the receiver.

FIG. 21 is a flowchart of a method for turning off the wireless charging receiver according to an embodiment of this application.

S2101: During turn-off of the receiver, control the switching tube of the rectifier to be closed, so that the load is bypassed.

A purpose of bypassing the load is to prevent a current from flowing through the load. Therefore, even if the load is open-circuited, there is no excessively high voltage at the two ends of the load during turn-on of the transmitter. This protects the load from damage during turn-on of the transmitter.

S2102: When it is determined that a current of the transmitter coil of the transmitter is less than a second preset current and greater than the first preset current, control the receiver to enter the off state.

Different implementations of the rectifier correspond to different specific turn-on and turn-off procedures, which are separately described below.

### First implementation:

The rectifier includes two bridge arms, and all switching tubes of upper half bridge arms and lower half bridge arms of the two bridge arms are controllable switching tubes.

The controlling a switching tube of the rectifier to be closed, so that a load is bypassed, and then controlling the receiver to start working specifically includes:
during turn-on of the receiver, controlling all switching tubes of the upper half bridge arms of the rectifier or all switching tubes of the lower half bridge arms to be closed, so that the load is bypassed; when it is determined that the current of the transmitter coil of the transmitter is greater than the first preset current, controlling a phase-shift angle between the two bridge arms to gradually increase to a preset value, and controlling the switching tubes of the upper half bridge arms and the switching tubes of the lower half bridge arms to be complementarily conducted; and then controlling the receiver to start working.

The controlling a switching tube of the rectifier to be closed, so that a load is bypassed, and then controlling the receiver to enter an off state specifically includes:
when it is determined that the current of the transmitter coil of the transmitter is less than the second preset current and greater than the first preset current, controlling a phase-shift angle between the two bridge arms to gradually decrease until all the switching tubes of the upper half bridge arms of the rectifier are closed or all the switching tubes of the lower half bridge arms are closed, so that the load is bypassed, and then controlling the receiver to enter the off state.

### Second implementation:

The rectifier includes two bridge arms, all switching tubes of upper half bridge arms of the two bridge arms are diodes, and all switching tubes of lower half bridge arms of the two bridge arms are controllable switching tubes.

The controlling a switching tube of the rectifier to be closed, so that a load is bypassed, and then controlling the receiver to start working specifically includes:
controlling all the controllable switching tubes to be closed; when it is determined that the current of the transmitter coil of the transmitter is greater than the first preset current, controlling duty cycles of drive signals of the controllable switching tubes of the two bridge arms to gradually decrease to a preset value; and then controlling the receiver to start working.

The controlling a switching tube of the rectifier to be closed, so that a load is bypassed, and then controlling the receiver to enter an off state specifically includes:
when it is determined that the current of the transmitter coil of the transmitter is less than the second preset current and greater than the first preset current, controlling, by a controller, duty cycles of drive signals of the controllable switching tubes of the two bridge arms to gradually increase until all the controllable switching tubes are closed, and then controlling the receiver to enter the off state.

### Third implementation:

The rectifier includes one bridge arm, and all switching tubes of an upper half bridge arm and a lower half bridge arm of the bridge arm are controllable switching tubes.

The controlling a switching tube of the rectifier to be closed, so that a load is bypassed, and then controlling the receiver to start working specifically includes:
controlling a switching tube of the lower half bridge arm of the rectifier to be closed; when it is determined that the current of the transmitter coil of the transmitter is greater than the first preset current, controlling a switching tube of the upper half bridge arm and the switching tube of the lower half bridge arm to be complementarily conducted; and then controlling the receiver to start working.

The controlling a switching tube of the rectifier to be closed, so that a load is bypassed, and then controlling the receiver to enter an off state specifically includes:
when it is determined that the current of the transmitter coil of the transmitter is less than the second preset current and greater than the first preset current, controlling the switching tube of the lower half bridge arm of the rectifier to be closed, so that the load is bypassed, and then controlling the receiver to enter the off state.

### Fourth implementation:

The rectifier includes one bridge arm, a switching tube of a lower half bridge arm of the bridge arm is a controllable switching tube, and a switching tube of an upper half bridge arm of the bridge arm is a diode.

The controlling a switching tube of the rectifier to be closed, so that a load is bypassed, and then controlling the receiver to start working specifically includes:
controlling the controllable switching tube of the rectifier to be closed, and when it is determined that the current of the coil of the transmitter is greater than the first preset current, controlling a switch state of the controllable switching tube based on a preset duty cycle.

The controlling a switching tube of the rectifier to be closed, so that a load is bypassed, and then controlling the receiver to enter an off state specifically includes:
when it is determined that the current of the transmitter coil of the transmitter is less than the second preset current and greater than the first preset current, controlling, by a controller, the controllable switching tube to be closed, so that the load is bypassed, and then controlling the receiver to enter the off state.

Applying the method for turning on or turning off the receiver provided in the foregoing embodiments of this application can protect the receiver when the load is open-circuited in a turn-on or turn-off process. An input end of the rectifier is an equivalent current source, and a current source characteristic is that the load cannot be open-circuited. Therefore, in this application, during turn-on or turn-off, the load is bypassed by controlling the controllable switching tube in the rectifier, to protect the receiver.

It should be understood that, in this application, "at least one" means one or more, and "a plurality of" means two or more. The term "and/or" is used to describe an association relationship for describing associated objects, and indicates that three relationships may exist. For example, "A and/or B" may represent the following three cases: Only A exists, only B exists, and both A and B exist, where each of A and B may be singular or plural. The character "/" usually represents an "or" relationship between associated objects. "At least one of the following items" or a similar expression thereof means any combination of these items, including any combination of a single item or a plurality of items. For example, at least one of a, b, and c may represent a, b, c, "a and b", "a and c", "b and c", or "a, b, and c", where each of a, b, and c may be singular or plural.

## Claims

1. A wireless charging receiver, comprising a receiver coil (Ls), a compensation network (200), a rectifier (H2), and a controller (201), wherein
the receiver coil (Ls) is configured to convert an alternating magnetic field transmitted by a transmitter to an alternating current, and deliver the alternating current to the compensation network (200);
the compensation network (200) is configured to compensate the alternating current, and then deliver the compensated alternating current to the rectifier (H2);
the rectifier (H2) is configured to rectify the compensated alternating current to a direct current, and supply the direct current to a load;
the compensation network (200) is a compensation circuit with a current source characteristic, so that the receiver coil (Ls) and the compensation network (200), acting together with the transmitter, make an input end of the rectifier (H2) a constant current source; and
the controller (201) is configured to: during turn-on of the receiver, control a switching tube in the rectifier (H2) to be closed, so that the load is bypassed, an output end of the compensation network (200) is short-circuited, and no current flows through the load, and then control the receiver to start working; or during turn-off of the receiver, control a switching tube of the rectifier (H2) to be closed, so that the load is bypassed, an output end of the compensation network (200) is short-circuited, and no current flows through the load, and then control the receiver to enter an off state.

2. The receiver according to claim 1, wherein the controller (201) is specifically configured to: during turn-on of the receiver, control a first-part switching tube in the rectifier (H2) to be closed, so that the load is bypassed; and during turn-off of the receiver, control a second-part switching tube in the rectifier (H2) to be closed, so that the load is bypassed, wherein the first-part switching tube is a switching tube of an upper half bridge arm of the rectifier or a switching tube of a lower half bridge arm of the rectifier, and the second-part switching tube is the switching tube of the upper half bridge arm of the rectifier or the switching tube of the lower half bridge arm of the rectifier.

3. The receiver according to claim 1, wherein the rectifier (H2) comprises two bridge arms, and all switching tubes (S1, S2, S3, S4) of upper half bridge arms and lower half bridge arms of the two bridge arms are controllable switching tubes; and
during turn-on of the receiver, the controller (201) is configured to control all switching tubes (S1, S3) of the upper half bridge arms of the rectifier or all switching tubes (S2, S4) of the lower half bridge arms to be closed, so that the load is bypassed; and when it is determined that a current of a transmitter coil of the transmitter is greater than a first preset current, the controller (201) is configured to control a phase-shift angle between the two bridge arms to gradually increase to a preset value, to control the switching tubes of the upper half bridge arms and the switching tubes of the lower half bridge arms to be complementarily conducted, and then to control the receiver to start working.

4. The receiver according to claim 3, wherein during turn-off of the receiver, when it is determined that a current of the transmitter coil of the transmitter is less than a second preset current and greater than the first preset current, the controller (201) is configured to control a phase-shift angle between the two bridge arms to gradually decrease until all the switching tubes (S1, S3) of the upper half bridge arms of the rectifier are closed or all the switching tubes (S2, S4) of the lower half bridge arms are closed, so that the load is bypassed; and then the controller (201) is configured to control the receiver to enter the off state.

5. The receiver according to claim 1, wherein the rectifier (H2) comprises two bridge arms, all switching tubes of upper half bridge arms of the two bridge arms are diodes (D1, D3), and all switching tubes of lower half bridge arms of the two bridge arms are controllable switching tubes (S2, S4); and
during turn-on of the receiver, the controller (201) is configured to control all the controllable switching tubes (S2, S4) to be closed; and when it is determined that a current of a transmitter coil of the transmitter is greater than a first preset current, the controller (201) is configured to control duty cycles of drive signals of the controllable switching tubes (S2, S4) of the two bridge arms to gradually decrease to a preset value, and then to control the receiver to start working.

6. The receiver according to claim 5, wherein during turn-off of the receiver, when it is determined that a current of the transmitter coil of the transmitter is less than a second preset current and greater than the first preset current, the controller (201) is configured to control duty cycles of drive signals of the controllable switching tubes (S2, S4) of the two bridge arms to gradually increase until all the controllable switching tubes are closed, and then to control the receiver to enter the off state.

7. The receiver according to claim 1, wherein the rectifier (H2) comprises one bridge arm, and all switching tubes (S1, S2) of an upper half bridge arm and a lower half bridge arm of the bridge arm are controllable switching tubes; and
during turn-on of the receiver, the controller (201) is configured to control a switching tube (S1) of the upper half bridge arm of the rectifier or a switching tube (S2) of the lower half bridge arm to be closed; and when it is determined that a current of a transmitter coil of the transmitter is greater than a first preset current, the controller (201) is configured to control the switching tube (S1) of the upper half bridge arm and the switching tube (S2) of the lower half bridge arm to be complementarily conducted.

8. The receiver according to claim 7, wherein during turn-off of the receiver, when it is determined that a current of the transmitter coil of the transmitter is less than a second preset current and greater than the first preset current, the controller (201) is configured to control the switching tube (S2) of the lower half bridge arm of the rectifier to be closed, so that the load is bypassed; and then the controller (201) is configured to control the receiver to enter the off state.

9. The receiver according to claim 1, wherein the rectifier (H2) comprises one bridge arm, a switching tube of a lower half bridge arm of the bridge arm is a controllable switching tube (S2), and a switching tube of an upper half bridge arm of the bridge arm is a diode (D1); and
during turn-on of the receiver, the controller (201) is configured to control the controllable switching tube (S2) of the rectifier to be closed; and when it is determined that a current of a transmitter coil of the transmitter is greater than a first preset current, the controller (201) is configured to control a switch state of the controllable switching tube (S2) based on a preset duty cycle.

10. The receiver according to claim 9, wherein during turn-off of the receiver, when it is determined that a current of the transmitter coil of the transmitter is less than a second preset current and greater than the first preset current, the controller (201) is configured to control the controllable switching tube (S2) to be closed, so that the load is bypassed; and then the controller (201) is configured to control the receiver to enter the off state.

11. A wireless charging system, comprising a transmitter and the receiver according to any one of claims 1 to 10, wherein the transmitter comprises an inverter (H1), a transmitter compensation network (100), a transmitter coil (Lp), and a transmitter controller (101);
the inverter (H1) is configured to invert a direct current to an alternating current, and deliver the alternating current to the transmitter compensation network (100);
the transmitter compensation network (100) is configured to compensate the alternating current, and then deliver the compensated alternating current to the transmitter coil (Lp);
the transmitter coil (Lp) is configured to transmit the compensated alternating current in a form of an alternating magnetic field; and
the transmitter controller (101) is configured to control closing of a controllable switching tube of the inverter, so that the transmitter coil generates a transmit current needed by the receiver; and the transmitter controller is further configured to receive a turn-on request or turn-off request sent by a controller (201) of the receiver or send a turn-on request or turn-off request to a controller (201) of the receiver.

12. The system according to claim 11, wherein the transmitter controller (101) is further configured to send a current of the transmitter coil (Lp) to the controller (201) of the receiver.

13. A wireless charging control method, applied to a wireless charging receiver, wherein the receiver comprises a receiver coil, a compensation network, and a rectifier; the compensation network is a compensation circuit with a current source characteristic, so that the receiver coil and the compensation network, acting together with a transmitter, make an input end of the rectifier a constant current source; and the method comprises:
during turn-on of the receiver, controlling (S2001) a switching tube in the rectifier to be closed, so that a load is bypassed, an output end of the compensation network (200) is short-circuited, and no current flows through the load, and then controlling (S2002) the receiver to start working; or
during turn-off of the receiver, controlling (S2101) a switching tube in the rectifier to be closed, so that a load is bypassed, an output end of the compensation network (200) is short-circuited, and no current flows through the load, and then controlling (S2102) the receiver to enter an off state.

14. The control method according to claim 13, wherein during turn-on of the receiver, a first-part switching tube in the rectifier is controlled to be closed, so that the load is bypassed; and during turn-off of the receiver, a second-part switching tube in the rectifier is controlled to be closed, so that the load is bypassed, wherein the first-part switching tube is a switching tube of an upper half bridge arm of the rectifier or a switching tube of a lower half bridge arm of the rectifier, and the second-part switching tube is the switching tube of the upper half bridge arm of the rectifier or the switching tube of the lower half bridge arm of the rectifier.

15. The control method according to claim 13, wherein the rectifier comprises two bridge arms, and all switching tubes of upper half bridge arms and lower half bridge arms of the two bridge arms are controllable switching tubes; and
the controlling a switching tube in the rectifier to be closed, so that a load is bypassed, and then controlling the receiver to start working specifically comprises:
during turn-on of the receiver, controlling all switching tubes of the upper half bridge arms of the rectifier or all switching tubes of the lower half bridge arms to be closed, so that the load is bypassed; when it is determined that a current of a transmitter coil of the transmitter is greater than a first preset current, controlling a phase-shift angle between the two bridge arms to gradually increase to a preset value, and controlling the switching tubes of the upper half bridge arms and the switching tubes of the lower half bridge arms to be complementarily conducted; and then controlling the receiver to start working.

## Patentansprüche

1. Drahtloser Ladeempfänger, umfassend eine Empfängerspule (Ls), ein Kompensationsnetzwerk (200), einen Gleichrichter (H2) und eine Steuerung (201), wobei
die Empfängerspule (Ls) dazu konfiguriert ist, ein durch einen Sender übertragenes magnetisches Wechselfeld in einen Wechselstrom umzuwandeln und den Wechselstrom dem Kompensationsnetzwerk (200) zuzuführen;
das Kompensationsnetzwerk (200) dazu konfiguriert ist, den Wechselstrom zu kompensieren und den kompensierten Wechselstrom daraufhin dem Gleichrichter (H2) zuzuführen;
der Gleichrichter (H2) dazu konfiguriert ist, den kompensierten Wechselstrom in einen Gleichstrom umzuwandeln und den Gleichstrom einer Last zuzuführen;
das Kompensationsnetzwerk (200) eine Kompensationsschaltung mit einer Stromquellenkennlinie ist, sodass die Empfängerspule (Ls) und das Kompensationsnetzwerk (200) zusammen mit dem Sender ein Eingangsende des Gleichrichters (H2) zu einer Konstantstromquelle machen; und
die Steuerung (201) zu Folgendem konfiguriert ist: beim Einschalten des Empfängers, Steuern einer Schaltröhre in dem Gleichrichter (H2) so, dass sie geschlossen wird, so dass die Last überbrückt wird, ein Ausgangsende des Kompensationsnetzwerks (200) kurzgeschlossen wird und kein Strom durch die Last fließt, und daraufhin Steuern des Empfängers so, dass er in Betrieb genommen wird; oder beim Ausschalten des Empfängers, Steuern einer Schaltröhre des Gleichrichters (H2) so, dass sie geschlossen wird, so dass die Last überbrückt wird, ein Ausgangsende des Kompensationsnetzwerks (200) kurzgeschlossen wird und kein Strom durch die Last fließt, und daraufhin Steuern des Empfängers so, dass er in den Aus-Zustand versetzt wird.

2. Empfänger nach Anspruch 1, wobei die Steuerung (201) insbesondere zu Folgendem konfiguriert ist: beim Einschalten des Empfängers, Steuern einer Schaltröhre des ersten Teils in dem Gleichrichter (H2) so, dass sie geschlossen wird, so dass die Last überbrückt wird; und beim Ausschalten des Empfängers, Steuern einer Schaltröhre des zweiten Teils in dem Gleichrichter (H2) so, dass sie geschlossen wird, so dass die Last überbrückt wird, wobei die Schaltröhre des ersten Teils eine Schaltröhre eines oberen Halbbrückenzweigs des Gleichrichters oder eine Schaltröhre eines unteren Halbbrückenzweigs des Gleichrichters ist und die Schaltröhre des zweiten Teils die Schaltröhre des oberen Halbbrückenzweigs des Gleichrichters oder die Schaltröhre des unteren Halbbrückenzweigs des Gleichrichters ist.

3. Empfänger nach Anspruch 1, wobei der Gleichrichter (H2) zwei Brückenzweige umfasst und sämtliche Schaltröhren (S1, S2, S3, S4) der oberen Halbbrückenzweige und der unteren Halbbrückenzweige der zwei Brückenzweige steuerbare Schaltröhren sind; und
beim Einschalten des Empfängers, die Steuerung (201) dazu konfiguriert ist, sämtliche Schaltröhren (S1, S3) der oberen Halbbrückenzweige des Gleichrichters oder sämtliche Schaltröhren (S2, S4) der unteren Halbbrückenzweige so zu steuern, dass sie geschlossen werden, so dass die Last überbrückt wird; und, wenn festgestellt wird, dass ein Strom einer Senderspule des Senders einen ersten voreingestellten Strom überschreitet, die Steuerung (201) dazu konfiguriert ist, einen Phasenverschiebungswinkel zwischen den zwei Brückenzweigen so zu steuern, dass er schrittweise bis zu einem voreingestellten Wert erhöht wird, um so zu steuern, dass die Schaltröhren der oberen Halbbrückenzweige und die Schaltröhren der unteren Halbbrückenzweige komplementär geleitet werden, und daraufhin Steuern des Empfängers so, dass er in Betrieb genommen wird.

4. Empfänger nach Anspruch 3, wobei beim Ausschalten des Empfängers, wenn festgestellt wird, dass ein Strom der Senderspule des Senders einen zweiten voreingestellter Strom unterschreitet und den ersten voreingestellten Strom überschreitet, die Steuerung (201) dazu konfiguriert ist, einen Phasenverschiebungswinkel zwischen den zwei Brückenzweigen so zu steuern, dass er schrittweise verringert wird, bis sämtliche Schaltröhren (S1, S3) der oberen Halbbrückenzweige des Gleichrichters oder sämtliche Schaltröhren (S2, S4) der unteren Halbbrückenzweige geschlossen sind, so dass die Last überbrückt wird; und daraufhin die Steuerung (201) dazu konfiguriert ist, den Empfänger so zu steuern, dass er in den Aus-Zustand versetzt wird.

5. Empfänger nach Anspruch 1, wobei der Gleichrichter (H2) zwei Brückenzweige umfasst, sämtliche Schaltröhren der oberen Halbbrückenzweige der zwei Brückenzweige Dioden (D1, D3) sind und sämtliche Schaltröhren der unteren Halbbrückenzweige der zwei Brückenzweige steuerbare Schaltröhren (S2, S4) sind; und beim Einschalten des Empfängers die Steuerung (201) dazu konfiguriert ist, sämtliche steuerbaren Schaltröhren (S2, S4) so zu steuern, dass sie geschlossen werden; und, wenn festgestellt wird, dass ein Strom einer Senderspule des Senders einen ersten voreingestellten Strom überschreitet, die Steuerung (201) dazu konfiguriert ist, die Tastverhältnisse der Steuersignale der steuerbaren Schaltröhren (S2, S4) der zwei Brückenzweige so zu steuern, dass sie schrittweise auf einen voreingestellten Wert verringert werden, und daraufhin der Empfänger so gesteuert wird, dass er in Betrieb genommen wird.

6. Empfänger nach Anspruch 5, wobei beim Ausschalten des Empfängers, wenn festgestellt wird, dass ein Strom der Senderspule des Senders einen zweiten voreingestellten Strom unterschreitet und den ersten voreingestellten Strom überschreitet, die Steuerung (201) dazu konfiguriert ist, die Tastverhältnisse der Steuersignale der steuerbaren Schaltröhren (S2, S4) der zwei Brückenzweige so zu steuern, dass sie schrittweise erhöht werden, bis sämtliche steuerbaren Schaltröhren geschlossen sind, und daraufhin der Empfänger so gesteuert wird, dass er in den Aus-Zustand versetzt wird.

7. Empfänger nach Anspruch 1, wobei der Gleichrichter (H2) einen Brückenzweig umfasst und sämtliche Schaltröhren (S1, S2) eines oberen Halbbrückenzweigs und eines unteren Halbbrückenzweigs des Brückenzweigs steuerbare Schaltröhren sind; und
beim Einschalten des Empfängers die Steuerung (201) dazu konfiguriert ist, eine Schaltröhre (S1) des oberen Halbbrückenzweigs des Gleichrichters oder eine Schaltröhre (S2) des unteren Halbbrückenzweigs so zu steuern, dass sie geschlossen wird; und, wenn festgestellt wird, dass ein Strom einer Senderspule des Senders einen ersten voreingestellten Strom überschreitet, die Steuerung (201) dazu konfiguriert ist, die Schaltröhre (S1) des oberen Halbbrückenzweigs und die Schaltröhre (S2) des unteren Halbbrückenzweigs so zu steuern, dass sie komplementär geleitet werden.

8. Empfänger nach Anspruch 7, wobei beim Ausschalten des Empfängers, wenn festgestellt wird, dass ein Strom der Senderspule des Senders einen zweiten voreingestellter Strom unterschreitet und den ersten voreingestellten Strom überschreitet, die Steuerung (201) dazu konfiguriert ist, die Schaltröhre (S2) des unteren Halbbrückenzweigs des Gleichrichters so zu steuern, dass sie geschlossen wird, so dass die Last überbrückt wird; und daraufhin die Steuerung (201) dazu konfiguriert ist, den Empfänger so zu steuern, dass er in den Aus-Zustand versetzt wird.

9. Empfänger nach Anspruch 1, wobei der Gleichrichter (H2) einen Brückenzweig umfasst, eine Schaltröhre eines unteren Halbbrückenzweigs des Brückenzweigs eine steuerbare Schaltröhre (S2) ist und eine Schaltröhre eines oberen Halbbrückenzweigs des Brückenzweigs eine Diode (D1) ist; und
beim Einschalten des Empfängers die Steuerung (201) dazu konfiguriert ist, die steuerbare Schaltröhre (S2) des Gleichrichters so zu steuern, dass sie geschlossen wird; und, wenn festgestellt wird, dass ein Strom einer Senderspule des Senders einen ersten voreingestellten Strom überschreitet, die Steuerung (201) dazu konfiguriert ist, einen Schaltzustand der steuerbaren Schaltröhre (S2) basierend auf einem voreingestellten Tastverhältnis zu steuern.

10. Empfänger nach Anspruch 9, wobei beim Ausschalten des Empfängers, wenn festgestellt wird, dass ein Strom der Senderspule des Senders einen zweiten voreingestellter Strom unterschreitet und den ersten voreingestellten Strom überschreitet, die Steuerung (201) dazu konfiguriert ist, die steuerbare Schaltröhre (S2) so zu steuern, dass sie geschlossen wird, so dass die Last überbrückt wird; und daraufhin die Steuerung (201) dazu konfiguriert ist, den Empfänger so zu steuern, dass er in den Aus-Zustand versetzt wird.

11. Drahtloses Ladesystem, umfassend einen Sender und den Empfänger nach einem der Ansprüche 1 bis 10, wobei der Sender einen Wechselrichter (H1), ein Senderkompensationsnetzwerk (100), eine Senderspule (Lp) und eine Sendersteuerung (101) umfasst;
der Wechselrichter (H1) dazu konfiguriert ist, einen Gleichstrom in einen Wechselstrom umzuwandeln und den Wechselstrom dem Senderkompensationsnetzwerk (100) zuzuführen;
das Senderkompensationsnetzwerk (100) dazu konfiguriert ist, den Wechselstrom zu kompensieren und daraufhin den kompensierten Wechselstrom der Senderspule (Lp) zuzuführen;
die Senderspule (Lp) dazu konfiguriert ist, den kompensierten Wechselstrom in einer Form eines magnetischen Wechselfelds zu übertragen; und
die Sendersteuerung (101) dazu konfiguriert ist, ein Schließen einer steuerbaren Schaltröhre des Wechselrichters zu steuern, so dass die Senderspule einen durch den Empfänger benötigten Übertragungsstrom erzeugt; und die Sendersteuerung ferner dazu konfiguriert ist, eine Einschaltanforderung oder Ausschaltanforderung, die durch eine Steuerung (201) des Empfängers gesendet wird, zu empfangen oder eine Einschaltanforderung oder Ausschaltanforderung an eine Steuerung (201) des Empfängers zu senden.

12. System nach Anspruch 11, wobei die Sendersteuerung (101) ferner dazu konfiguriert ist, einen Strom der Senderspule (Lp) an die Steuerung (201) des Empfängers zu senden.

13. Drahtloses Ladesteuerverfahren, angewendet auf einen drahtlosen Ladeempfänger, wobei der Empfänger eine Empfängerspule, ein Kompensationsnetzwerk und einen Gleichrichter umfasst; das Kompensationsnetzwerk eine Kompensationsschaltung mit einer Stromquellenkennlinie ist, sodass die Empfängerspule und das Kompensationsnetzwerk zusammen mit einem Sender ein Eingangsende des Gleichrichters zu einer Konstantstromquelle machen; und das Verfahren Folgendes umfasst:
beim Einschalten des Empfängers, Steuern (S2001) einer Schaltröhre in dem Gleichrichter so, dass sie geschlossen wird, so dass eine Last überbrückt wird, ein Ausgangsende des Kompensationsnetzwerks (200) kurzgeschlossen wird und kein Strom durch die Last fließt, und daraufhin Steuern (S2002) des Empfängers so, dass er in Betrieb genommen wird; oder
beim Ausschalten des Empfängers, Steuern (S2101) einer Schaltröhre in dem Gleichrichter so, dass sie geschlossen wird, so dass eine Last überbrückt wird, ein Ausgangsende des Kompensationsnetzwerks (200) kurzgeschlossen wird und kein Strom durch die Last fließt, und daraufhin Steuern (S2102) des Empfängers so, dass er in einen Aus-Zustand versetzt wird.

14. Steuerverfahren nach Anspruch 13, wobei beim Einschalten des Empfängers eine Schaltröhre des ersten Teils in dem Gleichrichter so gesteuert wird, dass sie geschlossen wird, so dass die Last überbrückt wird; und beim Ausschalten des Empfängers eine Schaltröhre des zweiten Teils in dem Gleichrichter so gesteuert wird, dass sie geschlossen wird, so dass die Last überbrückt wird, wobei die Schaltröhre des ersten Teils eine Schaltröhre eines oberen Halbbrückenzweigs des Gleichrichters oder eine Schaltröhre eines unteren Halbbrückenzweigs des Gleichrichters ist und die Schaltröhre des zweiten Teils die Schaltröhre des oberen Halbbrückenzweigs des Gleichrichters oder die Schaltröhre des unteren Halbbrückenzweigs des Gleichrichters ist.

15. Steuerverfahren nach Anspruch 13, wobei der Gleichrichter zwei Brückenzweige umfasst und sämtliche Schaltröhren der oberen Halbbrückenzweige und der unteren Halbbrückenzweige der zwei Brückenzweige steuerbare Schaltröhren sind; und
das Steuern einer Schaltröhre in dem Gleichrichter so, dass sie geschlossen wird, so dass eine Last überbrückt wird, und daraufhin Steuern des Empfängers so, dass er in Betrieb genommen wird, insbesondere Folgendes umfasst:
beim Einschalten des Empfängers, Steuern sämtlicher Schaltröhren der oberen Halbbrückenzweige des Gleichrichters oder sämtlicher Schaltröhren der unteren Halbbrückenzweige so, dass sie geschlossen werden, so dass die Last überbrückt wird; wenn festgestellt wird, dass ein Strom einer Senderspule des Senders einen ersten voreingestellten Strom überschreitet, Steuern eines Phasenverschiebungswinkels zwischen den zwei Brückenzweigen so, dass er schrittweise bis zu einem voreingestellten Wert erhöht wird, und Steuern der Schaltröhren der oberen Halbbrückenzweige und der Schaltröhren der unteren Halbbrückenzweige so, dass sie komplementär geleitet werden; und daraufhin Steuern des Empfängers so, dass er in Betrieb genommen wird.

## Revendications

1. Récepteur de charge sans fil, comprenant une bobine réceptrice (Ls), un réseau de compensation (200), un redresseur (H2) et un dispositif de commande (201), dans lequel la bobine réceptrice (Ls) est configurée pour convertir un champ magnétique alternatif transmis par un émetteur en un courant alternatif et délivrer le courant alternatif au réseau de compensation (200) ;
le réseau de compensation (200) est configuré pour compenser le courant alternatif, puis délivrer le courant alternatif compensé au redresseur (H2) ;
le redresseur (H2) est configuré pour redresser le courant alternatif compensé en un courant continu et fournir le courant continu à une charge ;
le réseau de compensation (200) est un circuit de compensation présentant une caractéristique de source de courant, de sorte que la bobine réceptrice (Ls) et le réseau de compensation (200), agissant conjointement avec l'émetteur, font d'une extrémité d'entrée du redresseur (H2) une source de courant constant ; et le dispositif de commande (201) est configuré pour : lors de la mise sous tension du récepteur, commander la fermeture d'un tube de commutation dans le redresseur (H2), de sorte que la charge est contournée, qu'une extrémité de sortie du réseau de compensation (200) est court-circuitée et qu'aucun courant ne circule à travers la charge, puis commander le démarrage du fonctionnement du récepteur ; ou lors de la mise hors tension du récepteur, commander la fermeture d'un tube de commutation du redresseur (H2), de sorte que la charge est contournée, qu'une extrémité de sortie du réseau de compensation (200) est court-circuitée et qu'aucun courant ne circule à travers la charge, puis commander le récepteur afin qu'il entre dans un état d'arrêt.

2. Récepteur selon la revendication 1, dans lequel le dispositif de commande (201) est spécifiquement configuré pour : lors de la mise sous tension du récepteur, commander la fermeture d'un tube de commutation de première partie dans le redresseur (H2), de sorte que la charge est contournée ; et lors de la mise hors tension du récepteur, commander la fermeture d'un tube de commutation de seconde partie dans le redresseur (H2), de sorte que la charge est contournée, dans lequel le tube de commutation de première partie est un tube de commutation d'un bras de demi-pont supérieur du redresseur ou un tube de commutation d'un bras de demi-pont inférieur du redresseur, et le tube de commutation de seconde partie est le tube de commutation du bras de demi-pont supérieur du redresseur ou le tube de commutation du bras de demi-pont inférieur du redresseur.

3. Récepteur selon la revendication 1, dans lequel le redresseur (H2) comprend deux bras de pont, et tous les tubes de commutation (S1, S2, S3, S4) de bras de demi-pont supérieurs et bras de demi-pont inférieurs des deux bras de pont sont des tubes de commutation commandables ; et
lors de la mise sous tension du récepteur, le dispositif de commande (201) est configuré pour commander la fermeture de tous les tubes de commutation (S1, S3) des bras de demi-pont supérieurs du redresseur ou de tous les tubes de commutation (S2, S4) des bras de demi-pont inférieurs, de sorte que la charge est contournée ; et lorsqu'il est déterminé qu'un courant d'une bobine émettrice de l'émetteur est supérieur à un premier courant prédéfini, le dispositif de commande (201) est configuré pour commander un angle de déphasage entre les deux bras de pont afin d'augmenter progressivement jusqu'à une valeur prédéfinie, pour commander la conduction complémentaire des tubes de commutation des bras de demi-pont supérieurs et des tubes de commutation des bras de demi-pont inférieurs, puis pour commander le démarrage du fonctionnement du récepteur.

4. Récepteur selon la revendication 3, dans lequel, lors de la mise hors tension du récepteur, lorsqu'il est déterminé que le courant de la bobine émettrice de l'émetteur est inférieur à un second courant prédéfini et supérieur au premier courant prédéfini, le dispositif de commande (201) est configuré pour commander un angle de déphasage entre les deux bras de pont afin de diminuer progressivement jusqu'à ce que tous les tubes de commutation (S1, S3) des bras de demi-pont supérieurs du redresseur soient fermés ou que tous les tubes de commutation (S2, S4) des bras de demi-pont inférieurs soient fermés, de sorte que la charge est contournée ; puis le dispositif de commande (201) est configuré pour commander le récepteur afin qu'il entre dans l'état d'arrêt.

5. Récepteur selon la revendication 1, dans lequel le redresseur (H2) comprend deux bras de pont, tous les tubes de commutation de bras de demi-pont supérieurs des deux bras de pont sont des diodes (D1, D3), et tous les tubes de commutation de bras de demi-pont inférieurs des deux bras de pont sont des tubes de commutation commandables (S2, S4) ; et
lors de la mise sous tension du récepteur, le dispositif de commande (201) est configuré pour commander la fermeture de tous les tubes de commutation commandables (S2, S4) ; et lorsqu'il est déterminé qu'un courant d'une bobine émettrice de l'émetteur est supérieur à un premier courant prédéfini, le dispositif de commande (201) est configuré pour commander des cycles de service de signaux de commande des tubes de commutation commandables (S2, S4) des deux bras de pont afin de diminuer progressivement jusqu'à une valeur prédéfinie, puis pour commander le démarrage du fonctionnement du récepteur.

6. Récepteur selon la revendication 5, dans lequel, lors de la mise hors tension du récepteur, lorsqu'il est déterminé qu'un courant de la bobine émettrice de l'émetteur est inférieur à un second courant prédéfini et supérieur au premier courant prédéfini, le dispositif de commande (201) est configuré pour commander des cycles de service de signaux de commande des tubes de commutation commandables (S2, S4) des deux bras de pont afin d'augmenter progressivement jusqu'à ce que tous les tubes de commutation commandables soient fermés, puis pour commander le récepteur afin qu'il entre dans l'état d'arrêt.

7. Récepteur selon la revendication 1, dans lequel le redresseur (H2) comprend un bras de pont, et tous les tubes de commutation (S1, S2) d'un bras de demi-pont supérieur et d'un bras de demi-pont inférieur du bras de pont sont des tubes de commutation commandables ; et
lors de la mise sous tension du récepteur, le dispositif de commande (201) est configuré pour commander la fermeture d'un tube de commutation (S1) du bras de demi-pont supérieur du redresseur ou d'un tube de commutation (S2) du bras de demi-pont inférieur ; et lorsqu'il est déterminé qu'un courant d'une bobine émettrice de l'émetteur est supérieur à un premier courant prédéfini, le dispositif de commande (201) est configuré pour commander la conduction complémentaire du tube de commutation (S1) du bras de demi-pont supérieur et du tube de commutation (S2) du bras de demi-pont inférieur.

8. Récepteur selon la revendication 7, dans lequel, lors de la mise hors tension du récepteur, lorsqu'il est déterminé qu'un courant de la bobine émettrice de l'émetteur est inférieur à un second courant prédéfini et supérieur au premier courant prédéfini, le dispositif de commande (201) est configuré pour commander la fermeture du tube de commutation (S2) du bras de demi-pont inférieur du redresseur, de sorte que la charge est contournée ; puis le dispositif de commande (201) est configuré pour commander le récepteur afin qu'il entre dans l'état d'arrêt.

9. Récepteur selon la revendication 1, dans lequel le redresseur (H2) comprend un bras de pont, un tube de commutation d'un bras de demi-pont inférieur du bras de pont est un tube de commutation commandable (S2), et un tube de commutation d'un bras de demi-pont supérieur du bras de pont est une diode (D1) ; et
lors de la mise sous tension du récepteur, le dispositif de commande (201) est configuré pour commander la fermeture du tube de commutation commandable (S2) du redresseur ; et lorsqu'il est déterminé qu'un courant d'une bobine émettrice de l'émetteur est supérieur à un premier courant prédéfini, le dispositif de commande (201) est configuré pour commander un état de commutation du tube de commutation commandable (S2) sur la base d'un cycle de service prédéfini.

10. Récepteur selon la revendication 9, dans lequel, lors de la mise hors tension du récepteur, lorsqu'il est déterminé qu'un courant de la bobine émettrice de l'émetteur est inférieur à un second courant prédéfini et supérieur au premier courant prédéfini, le dispositif de commande (201) est configuré pour commander la fermeture du tube de commutation commandable (S2), de sorte que la charge est contournée ; puis le dispositif de commande (201) est configuré pour commander le récepteur afin qu'il entre dans l'état d'arrêt.

11. Système de charge sans fil, comprenant un émetteur et le récepteur selon l'une quelconque des revendications 1 à 10, dans lequel l'émetteur comprend un onduleur (H1), un réseau de compensation d'émetteur (100), une bobine émettrice (Lp) et un dispositif de commande d'émetteur (101) ;
l'onduleur (H1) est configuré pour convertir un courant continu en courant alternatif et délivrer le courant alternatif au réseau de compensation d'émetteur (100) ;
le réseau de compensation d'émetteur (100) est configuré pour compenser le courant alternatif, puis délivrer le courant alternatif compensé à la bobine émettrice (Lp) ;
la bobine émettrice (Lp) est configurée pour transmettre le courant alternatif compensé sous la forme d'un champ magnétique alternatif ; et
le dispositif de commande d'émetteur (101) est configuré pour commander la fermeture d'un tube de commutation commandable de l'onduleur, de sorte que la bobine émettrice génère un courant d'émission nécessaire au récepteur ; et le dispositif de commande d'émetteur est également configuré pour recevoir une demande de mise sous tension ou une demande de mise hors tension envoyée par un dispositif de commande (201) du récepteur ou envoyer une demande de mise sous tension ou une demande de mise hors tension à un dispositif de commande (201) du récepteur.

12. Système selon la revendication 11, dans lequel le dispositif de commande d'émetteur (101) est également configuré pour envoyer un courant de la bobine émettrice (Lp) au dispositif de commande (201) du récepteur.

13. Procédé de commande de charge sans fil, appliqué à un récepteur de charge sans fil, dans lequel le récepteur comprend une bobine réceptrice, un réseau de compensation et un redresseur ; le réseau de compensation est un circuit de compensation présentant une caractéristique de source de courant, de sorte que la bobine réceptrice et le réseau de compensation, agissant conjointement avec un émetteur, font d'une extrémité d'entrée du redresseur une source de courant constant ; et le procédé comprend :
lors de la mise sous tension du récepteur, la commande (S2001) de la fermeture d'un tube de commutation dans le redresseur, de sorte qu'une charge est contournée, qu'une extrémité de sortie du réseau de compensation (200) est court-circuitée et qu'aucun courant ne circule à travers la charge, puis la commande (S2002) du démarrage du fonctionnement du récepteur ; ou
lors de la mise hors tension du récepteur, la commande (S2101) de la fermeture d'un tube de commutation dans le redresseur, de sorte qu'une charge est contournée, qu'une extrémité de sortie du réseau de compensation (200) est court-circuitée et qu'aucun courant ne circule à travers la charge, puis la commande (S2102) du récepteur afin qu'il entre dans un état d'arrêt.

14. Procédé de commande selon la revendication 13, dans lequel, lors de la mise sous tension du récepteur, un tube de commutation de première partie dans le redresseur est commandé pour être fermé, de sorte que la charge est contournée ; et lors de la mise hors tension du récepteur, un tube de commutation de seconde partie dans le redresseur est commandé pour être fermé, de sorte que la charge est contournée, dans lequel le tube de commutation de première partie est un tube de commutation d'un bras de demi-pont supérieur du redresseur ou un tube de commutation d'un bras de demi-pont inférieur du redresseur, et le tube de commutation de seconde partie est le tube de commutation du bras de demi-pont supérieur du redresseur ou le tube de commutation du bras de demi-pont inférieur du redresseur.

15. Procédé de commande selon la revendication 13, dans lequel le redresseur comprend deux bras de pont, et tous les tubes de commutation de bras de demi-pont supérieurs et bras de demi-pont inférieurs des deux bras de pont sont des tubes de commutation commandables ; et
la commande de la fermeture d'un tube de commutation dans le redresseur, de sorte qu'une charge est contournée, puis la commande du démarrage du fonctionnement du récepteur, comprend spécifiquement :
lors de la mise sous tension du récepteur, la commande de tous les tubes de commutation des bras de demi-pont supérieurs du redresseur ou de tous les tubes de commutation des bras de demi-pont inférieurs, de sorte que la charge est contournée ;
lorsqu'il est déterminé qu'un courant d'une bobine émettrice de l'émetteur est supérieur à un premier courant prédéfini, la commande d'un angle de déphasage entre les deux bras de pont afin d'augmenter progressivement jusqu'à une valeur prédéfinie, et la commande de la conduction complémentaire des tubes de commutation des bras de demi-pont supérieurs et des tubes de commutation des bras de demi-pont inférieurs ; puis la commande du démarrage du fonctionnement du récepteur.
